(19) Europäisches Patentamt
European Patent Office
Office européen des brevets

(11) **EP 3 949 653 B1**

(12) **EUROPEAN PATENT SPECIFICATION**

(45) Date of publication and mention of the grant of the patent:
**20.07.2022 Bulletin 2022/29**

(21) Application number: **20717284.2**

(22) Date of filing: **23.03.2020**

(51) International Patent Classification (IPC):
*H04W 74/08* (2009.01)     *H04W 88/08* (2009.01)

(52) Cooperative Patent Classification (CPC):
**H04W 74/0808; H04W 88/08**

(86) International application number:
**PCT/IB2020/052709**

(87) International publication number:
**WO 2020/201901 (08.10.2020 Gazette 2020/41)**

(54) **ADVANCED ANTENNA SYSTEMS FOR SPATIAL LISTEN-BEFORE-TALK**

VERBESSERTE ANTENNENSYSTEME FÜR RÄUMLICHES LISTEN-BEFORE-TALK

SYSTÈMES D'ANTENNES AVANCÉES POUR ÉCOUTE AVANT ÉMISSION SPATIALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 US 201962826557 P**

(43) Date of publication of application:
**09.02.2022 Bulletin 2022/06**

(73) Proprietor: **Telefonaktiebolaget LM Ericsson (publ)**
**164 83 Stockholm (SE)**

(72) Inventors:
• **SMITH, Roland**
**Nepean, Ontario K2J 0E1 (CA)**
• **SIENKIEWICZ, Esther**
**Ottawa, Ontario K1Y 1E8 (CA)**
• **SKOF, Mike**
**Nepean, Ontario K2J 3Y7 (CA)**

(74) Representative: **Ericsson**
**Patent Development**
**Torshamnsgatan 21-23**
**164 80 Stockholm (SE)**

(56) References cited:
**US-A1- 2016 037 560     US-A1- 2016 192 395**

**Description**

**TECHNICAL FIELD**

Embodiments of the present disclosure generally relate to wireless communication networks, and particularly relates to improvements to operation of such networks in shared spectrum, such as in unlicensed frequency bands.

**BACKGROUND**

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases. The present disclosure relates generally to NR, but the following description of Long Term Evolution (LTE) technology is provided for context since it shares many features with NR.

LTE is an umbrella term for so-called fourth-generation (4G) radio access technologies developed within the Third-Generation Partnership Project (3GPP) and initially standardized in Release 8 (Rel-8) and Release 9 (Rel-9), also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases.

A feature added in LTE Rel-10 (Rel-10) is support for bandwidths larger than 20 MHz, while remaining backward compatible with Rel-8. As such, a wideband (e.g., >20MHz) LTE Rel-10 carrier should appear as a number of component carriers (CCs) to an LTE Rel-8 terminal. For an efficient use of a wideband Rel-10 carrier, legacy (e.g., Rel-8) terminals can be scheduled in all parts of the wideband LTE Rel-10 carrier. One way to achieve this is by means of Carrier Aggregation (CA), whereby an LTE Rel-10 UE can receive multiple CCs, each preferably having the same structure as a Rel-8 carrier.

Each of the CCs allocated to a UE also corresponds to a cell. In particular, the UE is assigned a primary serving cell (PCell) as the "main" cell serving the UE. Both data and control signaling can be transmitted over the PCell, which is always activated. In addition, the UE can be assigned one or more supplementary or secondary serving cells (SCells) that are typically used for transmitting data only. For example, the Scell(s) can provide extra bandwidth to enable greater data throughput, and can be activated or deactivated dynamically.

License Assisted Access (LAA) is a feature of LTE that leverages the unlicensed 5 GHz band in combination with licensed spectrum to deliver a performance boost for mobile device users. It uses CA in the downlink to combine LTE in unlicensed 5-GHz band with LTE in the licensed band to provide better data rates and a better user experience. For example, in LAA, the UE's PCell is in a licensed band while the UE's SCells can be in an unlicensed band. Since LAA operates in the 5-GHz band where Wi-Fi operates, it must be able to co-exist with Wi-Fi by avoiding channels that are being used by Wi-Fi users. LAA uses a concept called Listen-before-talk (LBT) that dynamically selects 5-GHz-band channel(s) that is(are) not being used, i.e., a "clear channel." If no clear channel is available, LAA will share a channel fairly with others.

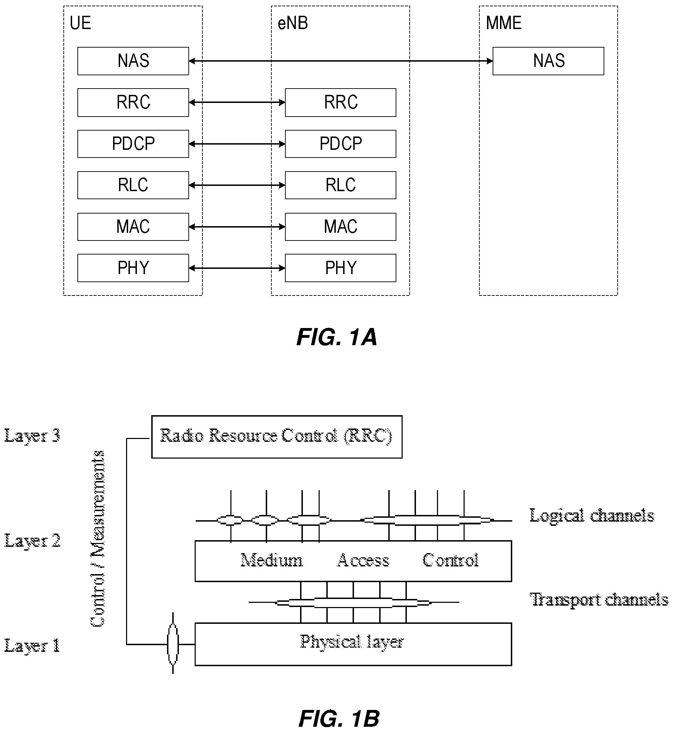

The LTE communication protocols between UE and network can be divided into user plane (or "U-plane") and control plane (or "C-plane") functionality. Figure 1A illustrates a block diagram of an exemplary C-plane protocol stack comprising Physical (PHY), Medium Access Control (MAC), Radio Link Control (RLC), Packet Data Convergence Protocol (PDCP), and Radio Resource Control (RRC) layers. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PHY, MAC, and RLC layers perform identical functions for both the U-plane and the C-plane. The PDCP layer provides ciphering/deciphering and integrity protection for both U-plane and C-plane, as well as other functions for the U-plane such as header compression.

The RRC layer controls communications between a UE and an eNB at the radio interface, as well as the mobility of a UE between cells in the E-UTRAN. After a UE is powered ON it will be in the RRC_IDLE state until an RRC connection is established with the network, at which time the UE will transition to RRC_CONNECTED state (e.g., where data transfer can occur). The UE returns to RRC_IDLE after the connection with the network is released. In RRC_IDLE state, the UE's radio is active on a discontinuous reception (DRX) schedule configured by upper layers. During DRX active periods (also referred to as "DRX On durations"), an RRC_IDLE UE receives system information (SI) broadcast by a serving cell, performs measurements of neighbor cells to support cell reselection, and monitors a paging channel on PDCCH for pages from the EPC via eNB. A UE in RRC_IDLE state is known in the EPC and has an assigned IP address, but is not known to the serving eNB (e.g., there is no stored context).

Figure 1B shows a block diagram of an exemplary LTE radio interface protocol architecture from the perspective of the PHY. The interfaces between the various layers are provided by Service Access Points (SAPs), indicated by the ovals in Figure 1B. The PHY interfaces with MAC and RRC protocol layers described above. The MAC provides different logical channels to the RLC layer (also described above), characterized by the type of information transferred, whereas the PHY provides a transport channel to the MAC, characterized by how the information is transferred over the radio interface. In providing this transport service, the PHY performs various functions including error detection and correction; rate-matching and mapping of the coded transport channel onto physical channels; power weighting, modulation, and demodulation of physical channels; transmit diversity, beamforming, and multiple input multiple output (MIMO) antenna processing; and sending radio measurements to higher layers (e.g., RRC).

The multiple access scheme for the LTE PHY is based on Orthogonal Frequency Division Multiplexing (OFDM) with a cyclic prefix (CP) in the downlink, and on Single-Carrier Frequency Division Multiple Access (SC-FDMA) with a cyclic prefix in the uplink. To support transmission in paired and unpaired spectrum, the LTE PHY supports both Frequency Division Duplexing (FDD) (including both full- and half-duplex operation) and Time Division Duplexing (TDD).

The LTE FDD downlink (DL) radio frame has a fixed duration of 10 ms and consists of 20 slots, labelled 0 through 19, each with a fixed duration of 0.5 ms. A 1-ms subframe comprises two consecutive slots where subframe *i* consists of slots 2*i* and 2i+1. Each exemplary DL slot consists of $N^{DL}_{symb}$ OFDM symbols, each of which is comprised of $N_{sc}$ OFDM subcarriers. A combination of a particular subcarrier in a particular symbol is known as a resource element (RE). Each RE is used to transmit a particular number of bits, depending on the type of modulation and/or bitmapping constellation used for that RE.

In general, an LTE physical channel corresponds to a set of REs carrying information that originates from higher layers. Downlink *(i.e.,* eNB to UE) physical channels provided by the LTE PHY include Physical Downlink Shared Channel (PDSCH), Physical Multicast Channel (PMCH), Physical Downlink Control Channel (PDCCH), Relay Physical Downlink Control Channel (R-PDCCH), Physical Broadcast Channel (PBCH), Physical Control Format Indicator Channel (PCFICH), and Physical Hybrid ARQ Indicator Channel (PHICH). In addition, the LTE PHY downlink includes various reference signals (e.g., channel state information reference signals, CSI-RS), synchronization signals, and discovery signals.

PDSCH is the main physical channel used for unicast downlink data transmission, but also for transmission of RAR (random access response), certain system information blocks, and paging information. PBCH carries the basic system information, required by the UE to access the network. PDCCH is used for transmitting downlink control information (DCI) including scheduling information for DL messages on PDSCH, grants for UL transmission on PUSCH, and channel quality feedback *(e.g.,* CSI) for the UL channel. PHICH carries HARQ feedback (e.g., ACK/NAK) for UL transmissions by the UEs.

Uplink *(i.e.,* UE to eNB) physical channels provided by the LTE PHY include Physical Uplink Shared Channel (PUSCH), Physical Uplink Control Channel (PUCCH), and Physical Random-Access Channel (PRACH). In addition, the LTE PHY uplink includes various reference signals including demodulation reference signals (DM-RS), which are transmitted to aid the eNB in the reception of an associated PUCCH or PUSCH; and sounding reference signals (SRS), which are not associated with any uplink channel.

PUSCH is the uplink counterpart to the PDSCH. PUCCH is used by UEs to transmit uplink control information (UCI) including HARQ feedback for eNB DL transmissions, channel quality feedback *(e.g.,* CSI) for the DL channel, scheduling requests (SRs), *etc.* PRACH is used for random access preamble transmission.

Within the LTE DL, certain REs within each LTE subframe are reserved for the transmission of reference signals, such as DM-RS mentioned above. Other DL reference signals include cell-specific reference signals (CRS), positioning reference signals (PRS), and CSI reference signals (CSI-RS). UL reference signals include DM-RS and SRS mentioned above. Other RS-like DL signals include Primary Synchronization Sequence (PSS) and Secondary Synchronization Sequence (SSS), which facilitate the UEs time and frequency synchronization and acquisition of system parameters (e.g., via PBCH).

The fifth-generation (5G) NR technology shares many similarities with fourth-generation LTE. For example, NR uses CP-OFDM (Cyclic Prefix Orthogonal Frequency Division Multiplexing) in the DL and both CP-OFDM and DFT-spread OFDM (DFT-S-OFDM) in the UL. As another example, in the time domain, NR DL and UL physical resources are organized into equal-sized 1-ms subframes. A subframe is further divided into multiple slots of equal duration, with each slot including multiple OFDM-based symbols. As another example, NR RRC layer includes RRC_IDLE and RRC_CONNECTED states, but adds an additional state known as RRC_INACTIVE, which has some properties similar to a "suspended" condition used in LTE.

In addition to providing coverage via "cells," as in LTE, NR networks also provide coverage via "beams." In general, a DL "beam" is a coverage area of a network-transmitted RS that may be measured or monitored by a UE. In NR, for example, such RS can include any of the following, alone or in combination: SS/PBCH block (SSB), CSI-RS, tertiary reference signals (or any other sync signal), positioning RS (PRS), DMRS, phase-tracking reference signals (PTRS), *etc.* In general, SSB is available to all UEs regardless of RRC state, while other RS *(e.g.,* CSI-RS, DM-RS, PTRS) are associated with specific UEs that have a network connection, *i.e.,* in RRC_CONNECTED state.

A next phase of 3GPP standards development includes adapting NR to support a feature similar to LTE LAA, referred to as NR-unlicensed (or "NR-U" for short). Since this technology utilizes unlicensed spectrum, however, it must be certified by regulatory agencies before it can be deployed for use. Certifications have traditionally focused on transmitter and receiver specifications, with defined technical requirements, such as those in 3GPP TS 38.104 V15.4.0. Requirements include operating bands and channels, conducted and radiated transmitter and receiver characteristics, and performance requirements. These establish the minimum RF characteristics and performance requirements of NR base stations (called "gNBs"), and are necessary to ensure the operation, performance, and coexistence of gNBs in an unlicensed band.

Nevertheless, LBT techniques used in LAA and other unlicensed-spectrum technologies do not take into account recent advancements in radio technology such as Advanced Antenna Systems (AAS) that are used in licensed-band networks (e.g., LTE) to facilitate increased coverage, increased data rates and capacity, and improved spectrum utilization. Such AAS are also expected to be widely deployed in NR networks, including for use in NR-U operation with unlicensed bands (e.g., 5-GHz). However, the use of AAS with unlicensed spectrum creates several problems, issues, and/or difficulties that must be solved before the anticipated benefits and/or advantages of NR-U can be realized.

Document US2016/192395 A1 discloses techniques for accessing a shared radio frequency spectrum band by selecting a subset antennas associated with a successful access procedure for accessing the shared radio frequency spectrum. In some examples, a wireless communication device, such as a network node, may perform a listen before talk (LBT) procedure for each of two or more subsets of antennas associated with the network node, and only those subsets of antennas that pass the LBT procedure are used for transmissions during the associated time period, while other antennas are idle, or used for transmissions on another radio frequency spectrum band during the associated time period. In some examples, antennas of a wireless communication device may perform an access procedure utilizing beamforming capabilities of associated antennas to determine one or more different spatial directions that may provide access to the shared radio frequency spectrum band.

Document US2016/037560 A1 discloses techniques for communications with spatial-specific sensing. A technique performed by a first communication node for providing contention-based transmission from the first communication node in a network to a second communication node includes determining, by the first communication node, a transmission direction, the transmission direction being characterized by a digital beamforming direction and an analog beamsteering direction; performing, by the first communication node, spatial-specific carrier sensing in accordance with a sensing direction associated with the transmission direction; determining, by the first communication node, a channel status of a channel along the sensing direction according to the spatial-specific carrier sensing; and transmitting, by the first communication node, a transmission along the transmission direction.

## Summary

According to aspects of the present disclosure, a method performed by a network node, a network node, a non-transitory computer-readable medium and a computer program product are provided according to the independent claims. Preferred embodiments are recited in the dependent claims.

Accordingly, exemplary embodiments of the present disclosure address shortcomings in existing techniques (e.g., in LTE) for deploying advanced antenna systems (AAS) in unlicensed spectrum that requires listen-before-talk (LBT) procedures before transmitting data on a shared channel. More generally, embodiments of the present disclosure can address various problems, issues, and/or drawbacks summarized above and described in more detail below.

The exemplary method includes performing a plurality of listen-before-talk (LBT) assessments for a corresponding plurality of substantially disjoint subsets of resources of a shared channel. The exemplary method also includes, based on the plurality of LBT assessments, determining that at least one resource subset is available for transmission. This determination is based on a threshold related to the size of the resource subset. The exemplary method also includes transmitting signals or data to one or more user equipment (UE) using only resources selected from the at least one resource subset determined to be available.

Other embodiments include network nodes (e.g., base station, gNB, eNB, en-gNB, ng-eNB, AP, etc., or component thereof) configured to perform the operations corresponding to any of the exemplary methods described herein. Other embodiments include non-transitory, computer-readable media storing computer-executable instructions that, when executed by processing circuitry of such network nodes, configure the same to perform operations corresponding to any operations or procedure described herein. Other embodiments include computer program products that include such executable instructions.

These and other objects, features, and advantages of embodiments of the present disclosure will become apparent upon reading the following Detailed Description in view of the Drawings briefly described below.

## BRIEF DESCRIPTION OF THE DRAWINGS

Figures 1A-1B show various block diagrams of exemplary Long-Term Evolution (LTE) protocol architectures.

Figures 2-3 illustrate two high-level views of an exemplary 5G network architecture.

Figure 4 shows an exemplary frequency-domain configuration for a 5G/NR UE.

Figure 5 shows an exemplary time-frequency resource grid for an NR slot.

Figure 6, which includes Figures 6A-6C, shows exemplary NR slot and mini-slot configurations.

Figure 7 is an exemplary graph showing a relationship between energy detection (ED) threshold and base station transmitter output power for LTE licensed-assisted access (LAA), as specified by 3GPP.

Figure 8 shows an exemplary advanced antenna system (AAS) beam arrangement that illustrates improvements provided by exemplary embodiments of the present disclosure.

Figure 9 shows a comparison of an exemplary listen-before-talk (LBT) assessment made on a single, 20-MHz LBT bandwidth vs. an exemplary LBT assessment made over an entire wideband 80-MHz carrier.

Figure 10 shows an exemplary arrangement of tracking reference signals (TRS) within OFDM symbols comprising a slot.

Figure 11 shows two exemplary scenarios employing single-user MIMO for spatial LBT operation, according to exemplary embodiments of the present disclosure.

Figure 12 shows two exemplary scenarios employing multi-user MIMO for spatial LBT operation, according to exemplary embodiments of the present disclosure.

Figure 13 shows two exemplary scenarios employing aggregate beams for spatial LBT operation, according to exemplary embodiments of the present disclosure.

Figure 14 shows an exemplary configuration of a transmit beam and the general contours of a corresponding minimum receive beam that encompasses the transmit beam, according to exemplary embodiments of the present disclosure.

Figure 15 shows an exemplary beamforming procedure between a WiFi Access Point (AP) and three (3) stations (STAs).

Figure 16 shows a flow diagram of an exemplary method (e.g., procedure) for a network node (e.g., base station, gNB, eNB, en-gNB, ng-eNB, AP, etc., or component thereof), according to various exemplary embodiments of the present disclosure.

Figure 17 illustrates a block diagram of an exemplary wireless communication device or UE configurable according to various exemplary embodiments of the present disclosure.

Figure 18 illustrates a block diagram of an exemplary network node configurable according to various exemplary embodiments of the present disclosure.

Figure 19 illustrates a block diagram of an exemplary network configuration usable to provide over-the-top (OTT) data services between a host computer and a UE, according to various exemplary embodiments of the present disclosure.

## DETAILED DESCRIPTION

Some of the embodiments contemplated herein will now be described more fully with reference to the accompanying drawings.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.*, unless explicitly stated otherwise. Any feature of any of the embodiments disclosed herein can be applied to any other embodiment, wherever appropriate. Likewise, any advantage of any of the embodiments can apply to any other embodiments, and vice versa. Other objectives, features and advantages of the enclosed embodiments will be apparent from the following description.

Furthermore, the following terms are used throughout the description given below:

- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station *(e.g.,* a New Radio (NR) base station (gNB) in a 3GPP Fifth Generation (5G) NR network or an enhanced or evolved Node B (eNB) in a 3GPP LTE network), base station distributed components (e.g., CU and DU), a high-power or macro base station, a low-power base station (e.g., micro, pico, femto, or home base station, or the like), an integrated access backhaul (IAB) node, a transmission point, a remote radio unit (RRU or RRH), and a relay node.

- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.

- Wireless Device: As used herein, a "wireless device" (or "WD" for short) is any type of device that has access to *(i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.* Unless otherwise noted, the term "wireless device" is used interchangeably herein with the term "user equipment" (or "UE" for short).

- Network Node: As used herein, a "network node" is any node that is either part of the radio access network (e.g., a radio access node or equivalent name discussed above) or of the core network (e.g., a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (e.g., administration) in the cellular communications network.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the concepts, principles, and/or embodiments described herein.

Furthermore, although the term "cell" is used herein, it should be understood that (particularly with respect to 5G NR) beams may be used instead of cells and, as such, concepts described herein apply equally to both cells and beams.

Note further, that functions described herein as being performed by a wireless device or a network node may be distributed over a plurality of wireless devices and/or network nodes. In other words, it is contemplated that the functions of a network node and/or a wireless device described herein are not limited to performance by a single physical device and, in fact, can be distributed among several physical devices.

As briefly mentioned above, LBT techniques used in LAA and other unlicensed-spectrum technologies do not take into account recent advancements in radio technology such as Advanced Antenna Systems (AAS) that are used in licensed-band networks (e.g., LTE) to facilitate increased coverage, increased data rates and capacity, and improved spectrum utilization. Such AAS are also expected to be widely deployed in 5G/NR networks, including for use in NR-U operation with unlicensed bands (e.g., 5-GHz). However, the use of AAS with unlicensed spectrum creates several problems, issues, and/or difficulties that must be solved before the anticipated benefits and/or advantages of NR-U can be realized. This is discussed in more detail below.

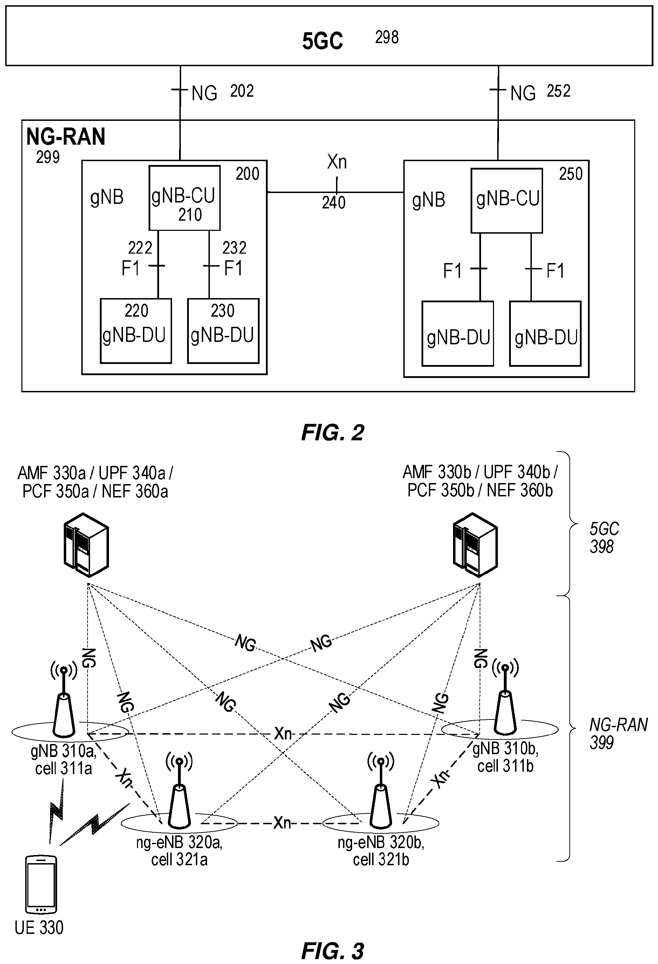

Figure 2 illustrates a high-level view of a 5G/NR network architecture, consisting of a Next Generation RAN (NG-RAN) 299 and a 5G Core (5GC) 298. NG-RAN 299 can include a set of gNodeB's (gNBs) connected to the 5GC via one or more NG interfaces, such as gNBs 200, 250 connected via interfaces 202, 252, respectively. In addition, the gNBs can be connected to each other via one or more Xn interfaces, such as Xn interface 240 between gNBs 200 and 250. With respect the NR interface to UEs, each of the gNBs can support frequency division duplexing (FDD), time division duplexing (TDD), or a combination thereof.

NG-RAN 299 is layered into a Radio Network Layer (RNL) and a Transport Network Layer (TNL). The NG-RAN architecture, *i.e.*, the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region," which is defined in 3GPP TS 23.501. If security protection for CP and UP data on TNL of NG-RAN interfaces is supported, NDS/IP shall be applied.

The NG RAN logical nodes shown in Figure 2 (and described in 3GPP TS 38.301 and 3GPP TR 38.801) include a central (or centralized) unit (CU or gNB-CU) and one or more distributed (or decentralized) units (DU or gNB-DU). For example, gNB 200 includes gNB-CU 210 and gNB-DUs 220 and 240. CUs (e.g., gNB-CU 210) are logical nodes that host higher-layer protocols and perform various gNB functions such controlling the operation of DUs. Each DU is a logical node that hosts lower-layer protocols and can include, depending on the functional split, various subsets of the gNB functions. As such, each of the CUs and DUs can include various circuitry needed to perform their respective functions, including processing circuitry, transceiver circuitry (e.g., for communication), and power supply circuitry. Moreover, the terms "central unit" and "centralized unit" are used interchangeably herein, as are the terms "distributed unit" and "decentralized unit."

A gNB-CU connects to gNB-DUs over respective F1 logical interfaces, such as interfaces 222 and 232 shown in Figure 2. The gNB-CU and connected gNB-DUs are only visible to other gNBs and the 5GC as a gNB. In other words, the F1 interface is not visible beyond gNB-CU.

Figure 3 shows another high-level view of an exemplary 5G/NR network architecture, including a Next Generation Radio Access Network (NG-RAN) 399 and a 5G Core (5GC) 398. As shown in the figure, NG-RAN 399 can include gNBs 310 (e.g., 310a,b) and ng-eNBs 320 (e.g., 320a,b) that are interconnected with each other via respective Xn interfaces. The gNBs and ng-eNBs are also connected via the NG interfaces to 5GC 398, more specifically to the AMF (Access and Mobility Management Function) 330 (e.g., AMFs 330a,b) via respective NG-C interfaces and to the UPF (User Plane Function) 340 (e.g., UPFs 340a,b) via respective NG-U interfaces. Moreover, the AMFs 330a,b can communicate with one or more policy control functions (PCFs, e.g., PCFs 350a,b) and network exposure functions (NEFs, e.g., NEFs 360a,b).

Each of the gNBs 310 can support the NR radio interface including frequency division duplexing (FDD), time division duplexing (TDD), or a combination thereof. In contrast, each of ng-eNBs 320 can support the LTE radio interface but, unlike conventional LTE eNBs (such as shown in Figure 1), connect to the 5GC via the NG interface. Each of the gNBs and ng-eNBs can serve a geographic coverage area including one more cells, including cells 311a-b and 321a-b shown as exemplary in Figure 3. As mentioned above, the gNBs and ng-eNBs can also use various directional beams to provide coverage in the respective cells. Depending on the particular cell in which it is located, a UE 330 can communicate with the gNB or ng-eNB serving that particular cell via the NR or LTE radio interface, respectively.

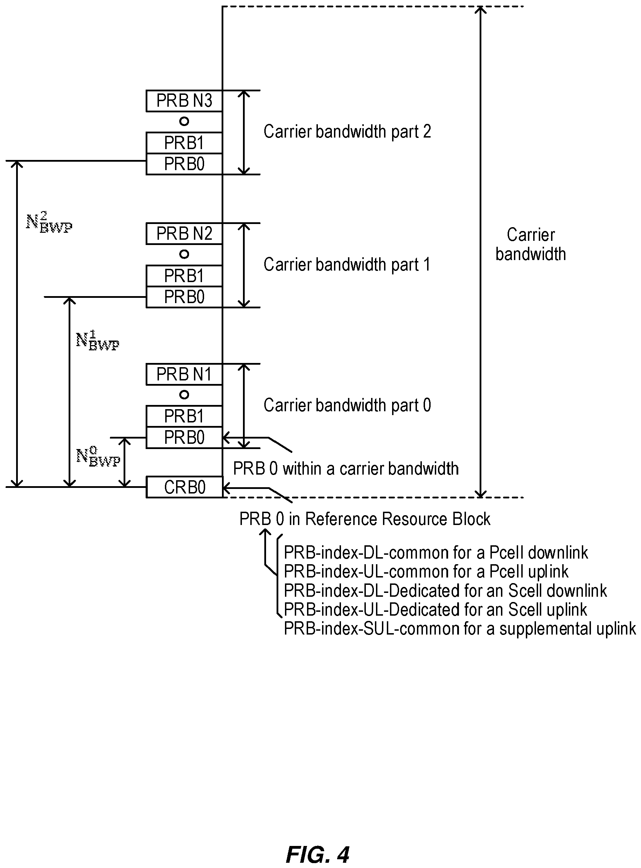

Figure 4 shows an exemplary frequency-domain configuration for an NR UE. In Rel-15 NR, a UE can be configured with up to four carrier bandwidth parts (BWPs) in the DL with a single DL BWP being active at a given time. A UE can be configured with up to four BWPs in the UL with a single UL BWP being active at a given time. If a UE is configured with a supplementary UL, the UE can be configured with up to four additional BWPs in the supplementary UL, with a single supplementary UL BWP being active at a given time.

Common RBs (CRBs) are numbered from 0 to the end of the system bandwidth. Each BWP configured for a UE has a common reference of CRB 0, such that a particular configured BWP may start at a CRB greater than zero. In this manner, a UE can be configured with a narrow BWP (e.g., 10 MHz) and a wide BWP (e.g., 100 MHz), each starting at a particular CRB, but only one BWP can be active for the UE at a given point in time.

Within a BWP, RBs are defined and numbered in the frequency domain from 0 to $N_{\mathrm{BWP}i}^{\mathrm{size}} - 1$, where i is the index of the particular BWP for the carrier. Similar to LTE, each NR resource element (RE) corresponds to one OFDM subcarrier during one OFDM symbol interval. NR supports various SCS values $\Delta f = (15 \times 2^\mu)$ kHz, where $\mu \in (0,1,2,3,4)$ are referred to as "numerologies." Numerology $\mu = 0$ (i.e., $\Delta f = 15kHz$) provides the basic (or reference) SCS that is also used in LTE. The symbol duration, cyclic prefix (CP) duration, and slot duration are inversely related to SCS or numerology. For example, there is one (1-ms) slot per subframe for $\Delta f = 15kHz$, two 0.5-ms slots per subframe for $\Delta f = 30kHz$, etc. In addition, the maximum carrier bandwidth is directly related to numerology according to $2^\mu * 50MHz$.

Table 1 below summarizes the supported NR numerologies and associated parameters. Different DL and UL numerologies can be configured by the network.

Table 1.

| $\mu$ | $\Delta f = 2^\mu$ 15 (kHz) | Cyclic prefix (CP) | CP duration | Symbol duration | Symbol+ CP | Slot duration | Max carrier BW |
|---|---|---|---|---|---|---|---|
| 0 | 15 | Normal | 4.69 µs | 66.67 µs | 71.35 µs | 1 ms | 50 MHz |
| 1 | 30 | Normal | 2.34 µs | 33.33 µs | 35.68 µs | 0.5 ms | 100 MHz |
| 2 | 60 | Normal, Extended | 1.17 µs | 16.67 µs | 17.84 µs | 0.25 ms | 200 MHz |
| 3 | 120 | Normal | 0.59 µs | 8.33 µs | 8.92 µs | 125 µs | 400 MHz |

(continued)

| μ | $\Delta f = 2^\mu \cdot 15$ (kHz) | Cyclic prefix (CP) | CP duration | Symbol duration | Symbol+ CP | Slot duration | Max carrier BW |
|---|---|---|---|---|---|---|---|
| 4 | 240 | Normal | 0.29 μs | 4.17 μs | 4.46 μs | 62.5 μs | 800 MHz |

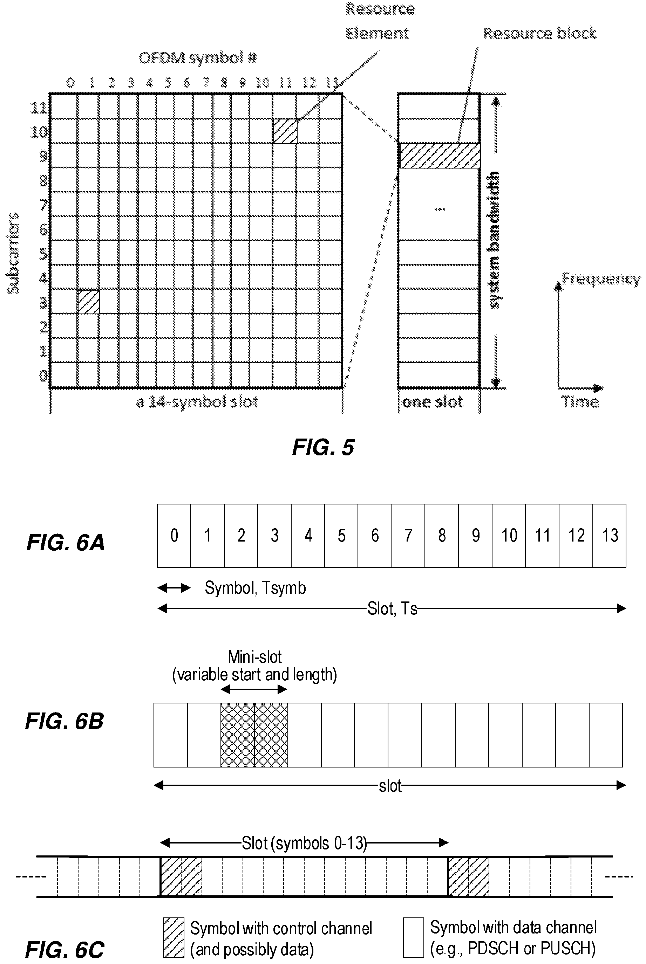

Figure 5 shows an exemplary time-frequency resource grid for an NR slot. As illustrated in Figure 5, a resource block (RB) consists of a group of 12 contiguous OFDM subcarriers for a duration of a 14-symbol slot. Like in LTE, a resource element (RE) consists of one subcarrier in one slot. An NR slot can include 14 OFDM symbols for normal cyclic prefix and 12 symbols for extended cyclic prefix.

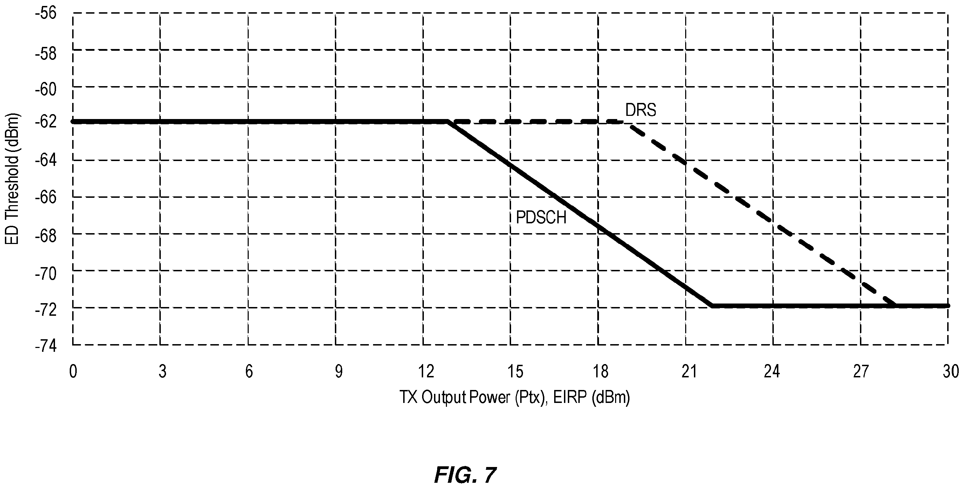

Figure 6A shows an exemplary NR slot configuration comprising 14 symbols, where the slot and symbols durations are denoted $T_s$ and $T_{symb}$, respectively. In addition, NR includes a Type-B scheduling, also known as "mini-slots." These are shorter than slots, typically ranging from one symbol up to one less than the number of symbols in a slot (e.g., 13 or 11), and can start at any symbol of a slot. Mini-slots can be used if the transmission duration of a slot is too long and/or the occurrence of the next slot start (slot alignment) is too late. Figure 7B shows an exemplary mini-slot arrangement in which the mini-slot begins in the third symbol of the slot and is two symbols in duration. Applications of mini-slots include unlicensed spectrum and latency-critical transmission (e.g., URLLC). However, mini-slots are not service-specific and can also be used for eMBB or other services.

Figure 6C shows another exemplary NR slot structure comprising 14 symbols. In this arrangement, PDCCH is confined to a region containing a particular number of symbols and a particular number of subcarriers, referred to as the control resource set (CORESET). In the exemplary structure shown in Figure 6C, the first two symbols contain PDCCH and each of the remaining 12 symbols contains physical data channels (PDCH), i.e., either PDSCH or PUSCH. Depending on the particular CORESET configuration, however, the first two slots can also carry PDSCH or other information, as required.

5G/NR networks, such as exemplified in Figures 2-3, are expected to operate at higher frequencies such as 5-60 GHz. Such systems are also expected to utilize a variety of multi-antenna technology (e.g., antenna arrays) at the transmitter, the receiver, or both. In general, multi-antenna technology can include a plurality of antennas in combination with advanced signal processing techniques (e.g., beamforming). Multi-antenna technology can be used to improve various aspects of a communication system, including system capacity (e.g., more users per unit bandwidth per unit area), coverage (e.g., larger area for given bandwidth and number of users), and increased per-user data rate (e.g., in a given bandwidth and area). Directional antennas can also ensure better wireless links as a mobile or fixed device experiences a time-varying channel.

AAS can include, or be based on, multi-antenna technology. Accordingly, unless otherwise noted, the terms "multi-antenna technology" and "advanced antenna systems" (AAS) are used interchangeably herein.

The availability of multiple antennas at the transmitter and/or the receiver can be utilized in different ways to achieve different goals. For example, multiple antennas at the transmitter and/or the receiver can be used to provide additional diversity against radio channel fading. To achieve such diversity, the channels experienced by the different antennas should have low mutual correlation, e.g., a sufficiently large antenna spacing ("spatial diversity") and/or different polarization directions ("polarization diversity"). Historically, the most common multi-antenna configuration has been the use of multiple antennas at the receiver side, which is commonly referred to as "receive diversity." Alternately and/or in addition, multiple antennas can be used in the transmitter to achieve transmit diversity. A multi-antenna transmitter can achieve diversity even without any knowledge of the channels between the transmitter and the receiver, so long as there is low mutual correlation between the channels of the different transmit antennas.

In various wireless communication systems, such as cellular systems, there can be fewer constraints on the complexity of the base station (also referred to herein as network node) compared to the terminal (also referred to herein as user equipment (UE) or wireless device). In such exemplary cases, a transmit diversity may be feasible in the downlink (i.e., base station to UE) only and, in fact, may provide a way to simplify the receiver in the terminal. In the uplink (i.e., terminal to base station) direction, due to a complexity of multiple transmit antennas, it may be preferable to achieve diversity by using a single transmit antenna in the terminal multiple receive antennas at the base station. Nevertheless, it is expected that in 5G/NR systems, certain operating configurations will utilize multiple antennas at both the terminal and the base station.

In other exemplary configurations, multiple antennas at the transmitter and/or the receiver can be used to shape or "form" the overall antenna beam (e.g., transmit and/or receive beam, respectively) in a certain way, with the general goal being to improve the received signal-to-interference-plus-noise ratio (SINR) and, ultimately, system capacity and/or coverage. This can be done, for example, by maximizing the overall antenna gain in the direction of the target receiver or transmitter or by suppressing specific dominant interfering signals. More specifically, the transmitter and/or receiver can determine an appropriate weight (e.g., $W_T$ or $W_R$) for each antenna element in an antenna array so as to produce one or more beams, with each beam covering a particular range of azimuth and elevation relative to the antenna array.

In general, beamforming can increase the signal strength at the receiver in proportion to the number of transmit antennas. Beamforming can be based either on high or low fading correlation between the antennas. High mutual antenna correlation can typically result from a small distance between antennas in an array. In such exemplary conditions, beamforming can boost the received signal strength but does not provide any diversity against radio-channel fading. On the other hand, low mutual antenna correlation typically can result from either a sufficiently large inter-antenna spacing or different polarization directions in the array. If some knowledge of the downlink channels of the different transmit antennas (e.g., the relative channel phases) is available at the transmitter, multiple transmit antennas with low mutual correlation can both provide diversity, and also shape the antenna beam in the direction of the target receiver and/or transmitter.

In other exemplary configurations, multiple antennas at both the transmitter and the receiver can further improve the SINR and/or achieve an additional diversity against fading compared to only multiple receive antennas or multiple transmit antennas. This can be useful in relatively poor channels that are limited, for example, by interference and/or noise (e.g., high user load or near cell edge). In relatively good channel conditions, however, the capacity of the channel becomes saturated such that further improving the SINR provides limited increases in capacity. In such cases, using multiple antennas at both the transmitter and the receiver can be used to create multiple parallel communication "channels" over the radio interface. This can facilitate a highly efficient utilization of both the available transmit power and the available bandwidth resulting in, e.g., very high data rates within a limited bandwidth without a disproportionate degradation in coverage. For example, under certain exemplary conditions, the channel capacity can increase linearly with the number of antennas and avoid saturation in the data capacity and/or rates. These techniques are commonly referred to as "spatial multiplexing" or multiple-input, multiple-output (MIMO) antenna processing.

In order to achieve these performance gains, MIMO generally provides that both the transmitter and receiver have knowledge of the channel from each transmit antenna to each receive antenna. In some exemplary embodiments, this can be done by the receiver measuring the amplitude and phase of a known transmitted data symbol (e.g., a pilot symbol and/or reference symbol) and sending these measurements to the transmitter as "channel state information" (CSI). CSI can include, for example, amplitude and/or phase of the channel at one or more frequencies, amplitude and/or phase of time-domain multipath components of the signal via the channel, direction of arrival of multipath components of the signal via the channel, and other direct channel measurements known by persons of ordinary skill. Alternately, or in addition, CSI can include a set of transmission parameters recommended for the channel based on one or more channel measurements.

Operation in unlicensed bands introduces a unique set of rules intended to promote spectrum sharing with otherwise competing transceivers. These rules promote an etiquette or behavior that facilitates spectrum sharing. An important one of these rules is LBT, in which radios are required to verify that the channel is "clear" before starting their transmissions. Significant analysis has been performed on LBT showing that it achieves the intended goal of spectrum sharing, helping to ensuring that radio transmitters operating on the same channel in unlicensed bands will behave in a mutually beneficial manner. Radio transceivers which follow LBT procedures generally will not cause interference to other radios during their active transmissions.

As part of an LBT procedure, a node desiring to transmit performs a clear channel assessment (CCA). This procedure can include sensing the medium as idle for a number of time intervals, which can be done in various ways including energy detection, preamble detection, or virtual carrier sensing. In virtual carrier sensing, the node reads control information from other transmitting nodes informing when a transmission ends. After sensing the medium idle, a node is typically allowed to transmit for a certain amount of time, referred to as transmission opportunity (TXOP). The length of the TXOP depends on regulation and type of CCA that has been performed, but typically ranges from 1ms to 10ms.

LBT has become well-known and popular due to ubiquitous use by Wireless LANs (also known as "WiFi"), even though most regulatory agencies did not enforce LBT operation. The introduction of LTE LAA and subsequent definition of LTE LAA regulations ensured LBT functionality was required by all radio transceivers, regardless if they were WiFi or LTE LAA. Energy detection (ED) thresholds were defined, simulated, debated, and soon became part of the regulatory specifications to be met by all devices that operate in unlicensed bands.

WiFi devices are predominantly deployed in residential home applications and typically employ multiple low-cost omnidirectional antennas. WiFi Access Points (APs) are designed for maximum performance at the lowest cost. WiFi chipsets employ explicit feedback techniques from end-point mobile station devices (STAs) to explicitly measure channel characteristics. Similar to the CSI discussed above, these explicit measurements enable WiFi radios to optimally transmit MIMO signals, and to optimize beamforming parameters uniquely for each STA.

Typical WiFi radios employ two different spectrum etiquette procedures for LBT. In addition to ED based on a fixed threshold, WiFi radios sense preamble transmissions from other STAs and APs, against a Carrier Sense (CS) (or preamble detection, PD) threshold. It is widely believed by the WiFi community that these two etiquette techniques are enough for spectrum sharing. However, there is currently debate about whether ED is sufficient for unlicensed band operation of LTE/NR networks, or if CS is also required. Some studies made on Directional Multi-Gigabit (DMG) and Enhanced DMG (EDMG) devices show that low CCA PD thresholds can degrade throughput, but these studies did not consider high interference environments such as stadiums, where antenna spatial reuse available from AAS will be important for performance.

More generally, AAS have a significant advantage over fixed directional antenna systems in their use of indices to dynamically direct antenna beams within the total coverage area of the radio to a narrow focus, often with transmission coherent gains of 30 dB above the general antenna gain, which may be 8 dBi. As such, these AAS can focus transmit energy on the UE, improving both the downlink transmit and, through reciprocity, the uplink received SINR and associated DL/UL throughputs, while enhancing spectral reuse.

Unlike the WiFi counterparts, 4G/LTE and 5G/NR radios employ a set of fixed antenna beams each with a specific index and known (e.g., characterized) DL and UL gains. A 32-element AAS can achieve coherent gains of 30 dB equivalent for an effective gain of 38 dBi (i.e., dB relative to isotropic pattern) with a 4° beamwidth, while a single antenna element in the AAS radio may have a gain of 8 dBi and a beamwidth of 120° (azimuth) $\times$ 30° (elevation).

Following current LBT regulations, an AAS-capable +NR radio would be required to listen across the 120° coverage applying a common LBT ED threshold. While this algorithm can achieve spectrum etiquette, especially for cases where DL power is limited by power spectral density restrictions, it will not meet the operational goals of improved throughput and improved spectrum utilization. Furthermore, in very high-density venues such as arenas and stadiums, an AAS-capable NR radio that follows currently-defined LBT static ED thresholds will suffer high levels of blocking, as the cell coverage is significantly greater than the AAS indexed beam.

3GPP TS 37.212 (v.15.1.0) specifies LTE PHY procedures for shared spectrum channel access. These procedures specify LBT rules, including free channel ED thresholds and 9-$\mu$s measurement durations called "slot times" ($T_{sl}$) over which ED measurements are made. The LBT rules also include a uniform distribution randomizing function, which is important for reducing channel collision rates during defined contention windows. 3GPP TS 37.212 section 4.1.5 also specifies an "energy detection threshold adaptation procedure" in which the ED threshold varies between -62 and -72 dBm according to the base station transmitter output power and is adjusted. Figure 7 is an exemplary graph showing a relationship between ED Threshold (dBm) and base station transmitter output power (Ptx, also in dBm), for both discovery reference signal (DRS) and PDSCH transmissions.

In the ED threshold adaptation procedure, an LTE base station (e.g., eNB) accessing a carrier on which LAA SCell transmission(s) are performed shall set the ED threshold (X_Thresh) to be less than or equal to the maximum energy detection threshold X_Thresh_max. The standard uses this approach to balance the LAA ED threshold with Ptx power changes associated with different transmissions such as PDSCH or DRS. However, this does not address spatial reuse.

Exemplary embodiments of the present disclosure address these and other issues, problems, and/or difficulties by providing novel techniques for dynamic assessment of LBT using AAS beamforming technologies. In general, such techniques leverage dynamic control of DL (also "downstream" or "transmit") and UL (also "upstream" or "receive") antenna spatial patterns and gains to assess LBT readiness. For example, embodiments can dynamically adjust the ED threshold $X_{Thres\_max}$ by incorporating AAS beam index feedback. As such, exemplary embodiments can utilize dynamic ED threshold adaptation based on antenna beamforming index and patterns rather than the ED power relationship discussed above. Such techniques can significantly improve radio access network (RAN) performance and spatial reuse, which can be critical for high-traffic-density venues, such as stadiums or arenas.

Exemplary embodiments of such novel techniqes include both spatial pattern and gain components, thereby achieving significant performance improvements. Such improvements are realized by dynamically aligning ED threshold levels to the known AAS coverage and gain, thereby ensuring the threshold aligns not only with the transmitter power level, but with the actual antenna coverage pattern and gain. Furthermore, exemplary embodiments can increase LBT success rate through spatial separation.

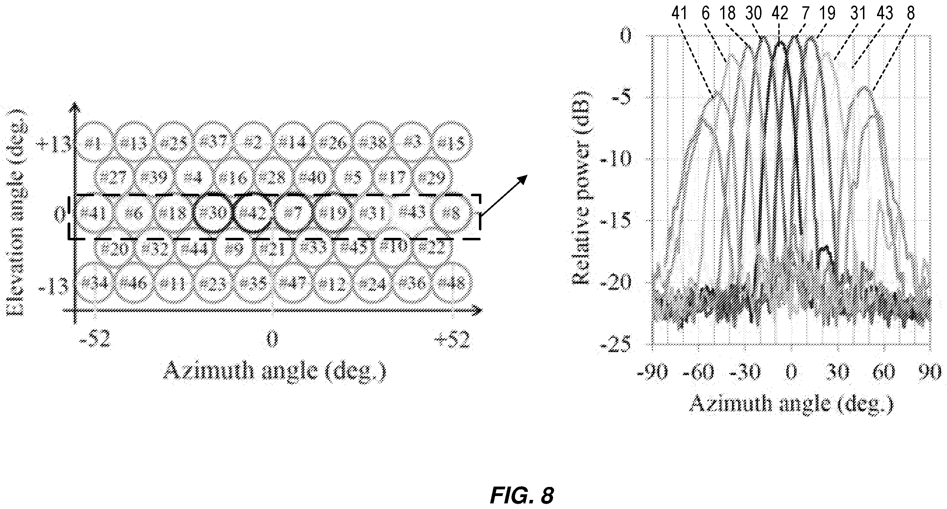

Figure 8 shows an exemplary AAS beam arrangement that illustrates performance improvements provided by exemplary embodiments of the present disclosure. More specifically, Figure 8 shows a 15-GHz high-band millimeter wave (mmW) NR AAS beamforming arrangement. The left portion shows 48 beams, with indices 1-48, arranged in a grid covering 30 (+/-15) degrees in elevation and 120 (+/-60) degrees in azimuth. The right portion shows the relative power of the beams comprising the middle elevation row of the grid. More specifically, the numerical labels of the relative power curves in the right portion correspond to the beam indices in the left portion. By including the antenna array factor, signal strength can be better directed to provide spatial coexistence between WiFi and NR-U, which increases spatial efficiency for both technologies.

Certain embodiments of the present disclosure can utilize time domain duplexing (TDD) channel reciprocity to align upstream and downstream beamformed spatial antenna patterns and gains, thereby ensuring the measured upstream beamformed signal strength has a gain and pattern equivalent to the downstream. Other embodiments of the present disclosure (e.g., for frequency-division duplexing, or FDD) can utilize calibrated upstream and downstream beamformed spatial antenna patterns and gains, thereby ensuring the measured upstream beamformed signal strength has a gain and pattern equivalent or lower than the downstream, such that the measured upstream signal spatial is representative of the downstream.

Exemplary embodiments can utilize upstream spatial beamforming to reject signals from "competing transceivers" that which would cause non-AAS spatial receivers to see as above ED threshold events, and to apply downstream spatial beamforming to ensure that transmitted signals do not interfere with the competing transceivers. In this way, exemplary embodiments eliminate detection of most Energy > ED Threshold events where the measured channel power is above the ED Threshold. This spatial filtering can result in a significant increase in channel throughput.

Put a different way, a more directed beam can reduce "noise" or signals from competing devices in the channel. The directed beam has a direction in which these signals are amplified, as well as other directions (outside of the beam) in which these signals are attenuated. For example, a directed beam may significantly amplify received signals in the direction of the beam (e.g., by +20 dB), but it can significantly attenuate signals that are not in the beam direction (e.g., by -20 dB). As such, this directionality not only reduces the noise from competing devices sensed in the spatial LBT procedure, but also the interference to those same competing devices when the same beam pattern is used to transmit downstream signals (e.g., DRS or PDSCH).

Exemplary embodiments can also facilitate parallelism of spatial filters, whereby spatial LBT operation is performed concurrently on multiple beam indices. For example, if spatial LBT is performed on multiple beam indexes, each of which is used for a different UE, then those spatial beams that meet LBT criteria for clear channel assessment can be prioritized for immediate data transmission. In this way, an AAS spatial LBT receiver can operate at or near 100% transmit efficiency simply by transmitting only on spatial beams permitted by instantaneous channel conditions.

Exemplary embodiments can also provide a competitive enhancement (e.g., compared to LAA) when employed in very high capacity scenarios. In this manner, embodiments facilitate spatial LBT etiquette in these systems to increase transmission opportunities while avoiding interference with other devices in the shared spectrum and/or unlicensed bands. For example, exemplary embodiments can facilitate an AAS radio transceiver to receive and transmit using narrow antenna beams within a high-traffic-density venue (e.g., stadium or arena), without impacting other co-existing AAS radio transceivers, by using orthogonal non-overlapping beams. In this case, the term "orthogonal" expresses the difference in spatial pattern gain at the locations of competing transceivers that may be using the same channel concurrently.

Exemplary embodiments can also support higher-frequency, mmW operation (e.g., at 28, 39, 52, and/or 60 GHz) where beamforming is increasingly important to meet link budgets. Exemplary embodiments are compatible with all forms on beamforming technologies including analog, digital, or analog/digital hybrid beamforming, as these terms are commonly understood. More generally, exemplary embodiments can be implemented on any radio platform with two or more antennas, although the performance benefits increase with the number of AAS antennas (e.g., eight or above) and the corresponding improvement in achievable spatial separation.

Although some embodiments are based on, or associated with, LBT ED thresholds, other embodiments can be based on, or associated with, other channel availability determinations such as LBT Clear Channel Assessment (CCA). In general, many different channel availability determinations can benefit from AAS spatial processing of received signals using different beam indexes.

Although some embodiments are based on, or associated with, 4G/LTE and 5G/NR radio protocols or architectures that use fixed-index beamforming (also known as "implicit beamforming") to communicate with UEs, other embodiments can be based on, or associated with, 802.11 WiFi systems that use "explicit" beamforming to communicate with UEs (or STAs). As this term is commonly understood, "explicit" beamforming does not have well-defined patterns or gains; however, it still can be used to generate spatially orthogonal patterns to improve channel access performance.

Performance requirements for NR base station (BS) spatial beamforming fall in the classification of *conducted, hybrid, and over-the-air (OTA) NR* requirements discussed above. More specifically, dynamic upstream and downstream spatial beamforming significantly increases LBT success rates, while not increasing OTA interference to competing transceivers sharing the spectrum.

Exemplary embodiments can utilize NR beamforming techniques across an entire channel (e.g., a 20-MHz LBT bandwidth of operation defined by regulations), or across a portion or sub-bandwidth of the channel. The sub-bandwidth can be equivalent to a BWP or some number of RBs as defined for NR. For example, if an NR-U transmitter plans to transmit on a portion of the channel (e.g., "N" RBs), then the transmitter needs to perform the LBT assessment only on those "N" RBs since that the planned transmission will only create interference to a competing transceiver within those RBs.

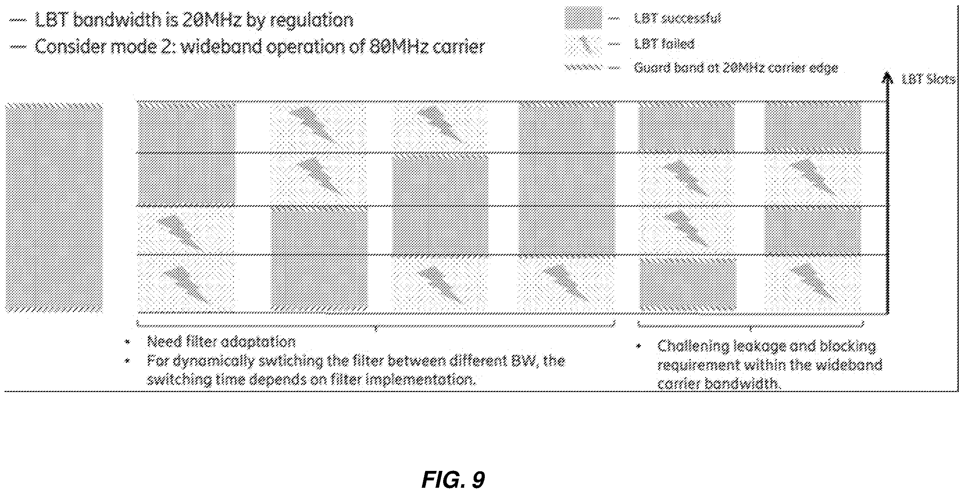

More generally, an LBT assessment made over multiple, individual portions of a channel will have a greater success rate (e.g., of finding a clear channel) than a single LBT assessment made over the entire channel. This is because a sufficient level of energy in any part of the channel will cause the LBT assessment of the entire channel to fail. On the other hand, this energy may or may not be present in a portion or sub-bandwidth under assessment. This principle is illustrated in Figure 9, which shows that an LBT assessment made on a single, 20-MHz LBT bandwidth will have a greater success rate than if this assessment is made over multiple LBT bandwidths comprising a wideband 80-MHz carrier. The example depicts successful and failed LBT attempts made in wideband operation and shows at least one successful LBT measurement over a single LBT bandwidth, while there are zero successful measurements across the wideband channel.

In Figure 9, the left-most case shows that when LBT is successful in all LBT sub-bands, then wideband operation comprising all LBT sub-bands can occur. Of course, it is understood that the emission mask needs to be satisfied for transmissions in LBT sub-bands in which LBT fails. Using a wideband carrier of 80 MHz with no transmission within the third LBT sub-band, emission requirements may be extremely challenging to meet. This is true for both UEs and gNBs.

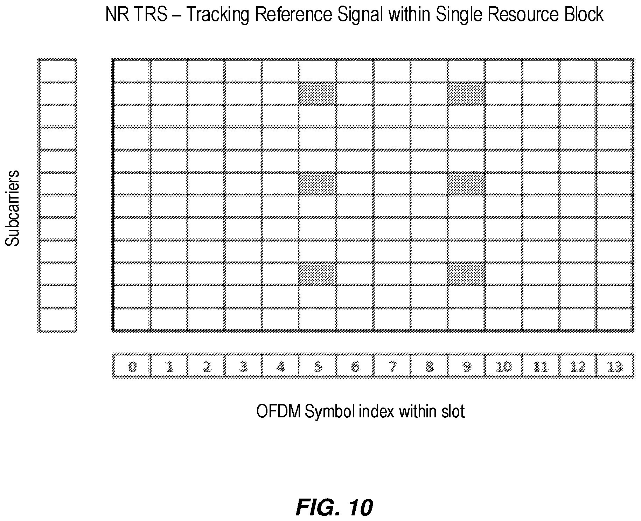

In some embodiments, LBT assessment can be conducted on less than the LBT bandwidth, e.g., a sub-bandwith less than the 20-MHz LBT bandwidth shown in Figure 9. The case of sub-LBT Channel operation is best exemplified with the NR Tracking Reference Signals (TRS). These TRS are transmitted only on specific RBs at specific OFDM symbol indices. The remaining RBs can be used for data, but often have no transmissions. Figure 10 shows an exemplary arrangement of TRS within OFDM symbols comprising a slot.

In this case, performing LBT only in advance of intended TRS symbol transmissions will have improved results compared to LBT performed over the entire channel. Additionally, NR may choose to over allocate TRS resources under the assumption that some will not be transmitted due to LBT failures. In this case, LBT may be performed on a portion of the channel, specifically, only for RBs scheduled for transmission to carry control and/or data.

According to the same principles, an LBT assessment made over a pattern of multiple, individual spatial regions will have a greater success rate (e.g., of finding a clear channel) than an LBT assessment made over a single, larger spatial region covering the multiple individual spatial regions. This is because a sufficient level of energy in any of the spatial regions will cause the LBT assessment of the entire larger spatial region to fail. On the other hand, this other energy may or may not be present in an individual spatial region under assessment. In the following description, operation according to these principles is referred to as "spatial LBT operation."

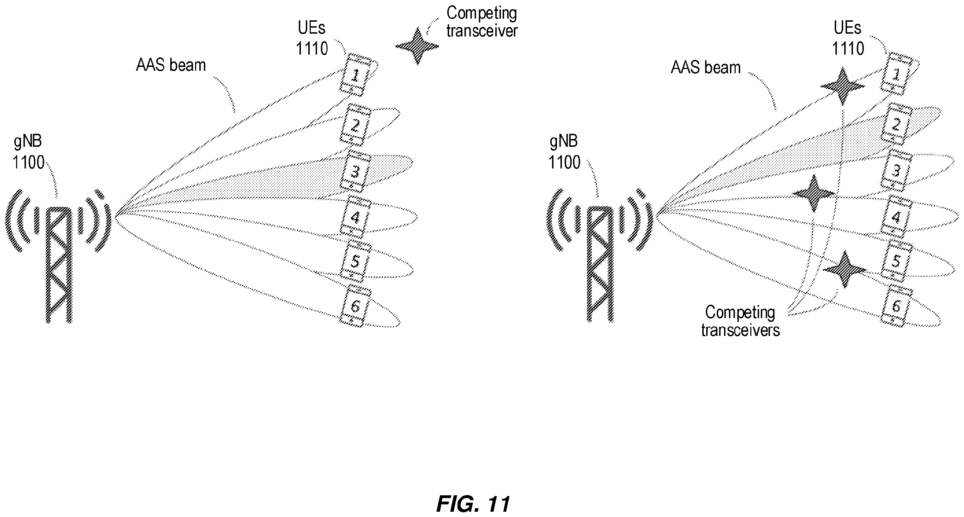

In some embodiments of spatial LBT operation, referred to as single-user MIMO (or "SU-MIMO" for short), an NR base station (commonly known as "gNB") employs spatial beamforming to direct spatial beams to different UEs, one at a time. Figure 11 shows two exemplary scenarios employing SU-MIMO for spatial LBT operation, according to exemplary embodiments of the present disclosure. The left example depicts a gNB (1100) with multiple UEs (1110) to schedule. The gNB performs a successful LBT on the spatial beam for UE-3, and then transmits to this UE. The right example shows the gNB performsing spatial LBT on all beams, with success only on the beam directed at UE-2 due to competing transceivers detected on other spatial beams. In this case, transmissions are enabled to UE-2. In general, LBT measurements can be made a very short duration (e.g., microseconds) before transmissions, after which the gNB has a small amount of time to set beam coefficients to point to UE-2.

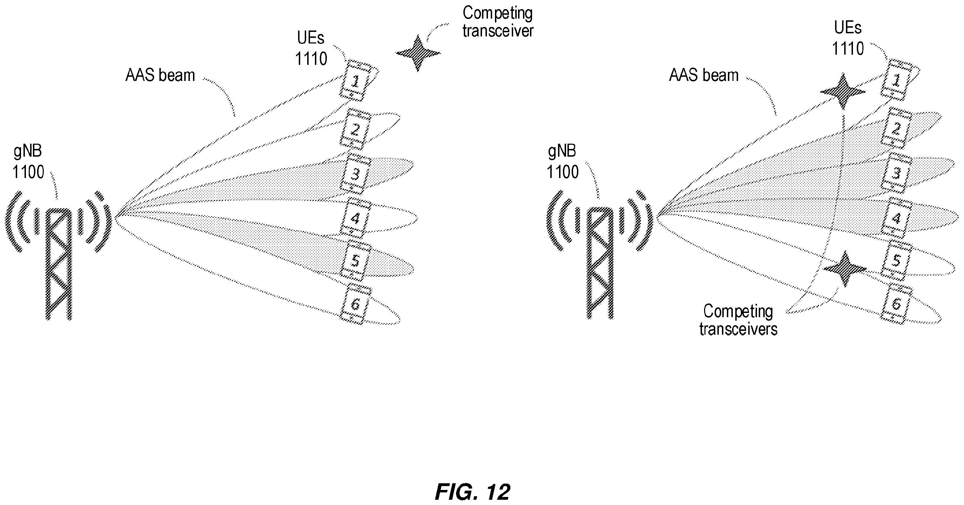

In other embodiments of spatial LBT operation, referred to as multi-user MIMO (or "MU-MIMO" for short), a gNB can employ spatial beamforming to direct energy concurrently to two or more UEs. In these embodiments, the gNB performs concurrent LBT measurements on at least two or more beams using digital beamforming of the received signals from all antenna elements. Figure 12 shows two exemplary scenarios employing MU-MIMO for spatial LBT operation, according to exemplary embodiments of the present disclosure. Reference numbers from Figure 11 are used to refer to substantially similar aspects of Figure 12. In the left example, the gNB performs a successful LBT on the spatial beams for UEs 3 and 5, and then transmits to these UEs. In the right example, the gNB performs spatial LBT on all beams, with success only on the beams directed at UEs 2-4 due to competing transceivers detected on other spatial beams. In this case, transmissions are enabled to UEs 2-4.

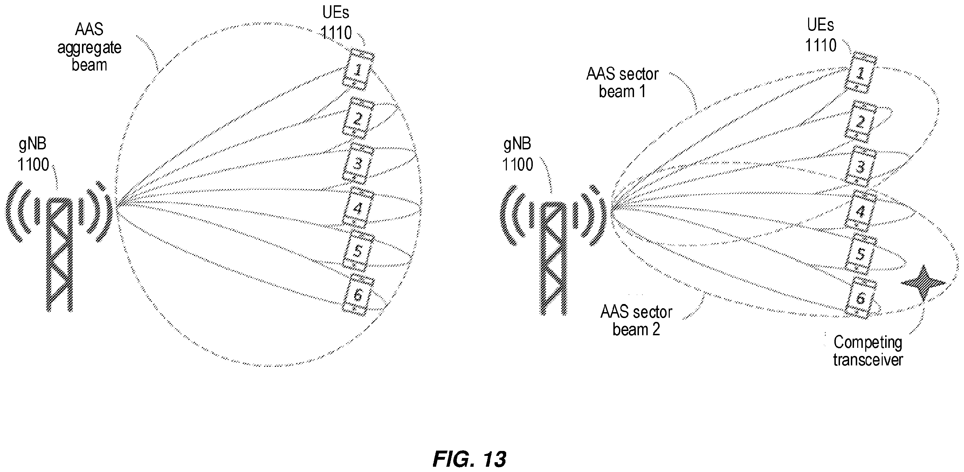

Digital beamforming may also be performed on the aggregate of two or more beams, as a means of reduced beamforming processing. This is sometimes referred to as "hybrid beamforming." Figure 13 shows two exemplary scenarios employing aggregate beams for spatial LBT operation, according to exemplary embodiments of the present disclosure. Reference numbers from Figure 11 are used to refer to substantially similar aspects of Figure 13. In the left example, if a single aggregate beam is measured and passes LBT, the gNB can transmit on any of the multiple single beams having gains and spatial patterns contained within the larger aggregate beam. In the right example, the gNB performs spatial beamforming on beam sectors, each of which represents a plurality of beams. In this example, LBT on Sector Beam 2 (which includes encompasses individual beams for UEs 4-6) fails due to detection of a competing transceiver. However, LBT on Sector Beam 1 succeeds, such that the gNB can transmit on Sector Beam 1 or on any of the beams to UEs 1-3 within that sector.

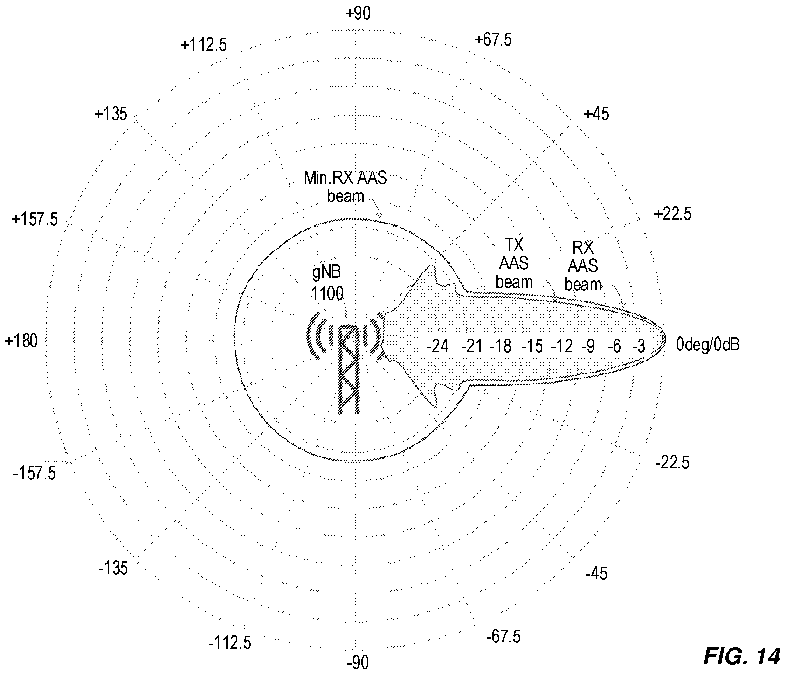

In this manner, by identifying "quiet" spatial regions, spatial LBT operation can increase the number of transmission opportunities by a gNB, and thereby improved data throughout of the shared, unlicensed spectrum. In general, a spatial beamforming LBT procedure must calculate two beams: a transmit a beam, and a receive a beam. The transmit beam will have a well-defined spatial pattern for higher gains, which becomes less well defined at lower gains where non-linear effects of sidelobes can be seen. For the receive beam to have a spatial pattern that encompasses the transmit beam, the gain and beamwidth must be defined for higher gains, and a minimum gain must be defined to encompass the non-linear sidelobes of the transmitter beam. Figure 14 shows an exemplary configuration of a well-defined transmit beam generated by gNB 1100 and the general contours of a corresponding minimum receive beam that encompasses the transmit beam.

It is expected that as government agencies exhaust available spectrum in the future, regulatory enhancements that facilitate spatial (and/or sub-bandwidth) LBT measurements for beamforming gNB transceivers will become more important and/or critical. As such, it is further expected that standards-setting organizations (SSOs), such as 3GPP, may introduce changes to existing LBT procedures based on simulations, investigations, etc. that demonstrate the effectiveness of spatial beamforming for LBT. To support such changes and/or new requirements, some changes and/or additions to gNB hardware and/or software functionality will be needed.

For example, a network node (e.g., gNB) configured for LBT sub-band operation may include and/or require:

   1. Single filter for wideband (e.g., 80-MHz) carrier where all LBT tests pass, and
   2. Separate filters covering individual LBT sub-bands (e.g., 20-MHz) where LBT is successful.

As another example, a network node (e.g., gNB) configured for LBT operation on a sub-bandwidth of RBs may include and/or require:

   1. Increased filtering of gNB transmissions to ensure that "off' RBs (e.g., RBs without data) do not impact a competing transceiver. Non-transmitting RBs will likely show as transmit noise roughly 30 dB below "on" RBs - call this $RB_{OFF\_POWER\_DELTA}$.
   2. Changes to LBT rules to allow RB operation, with a new ED Threshold at a level of $RB_{OFF\_POWER\_DELTA}$ above the previous ED Threshold, so that the "off' RBs (e.g., RBs without data) do not impact competing transceivers.

As another example, a network node (e.g., gNB) configured for LBT spatial operation may include and/or require:

   1. UL beamforming measurement capability which matches the DL beamforming patterns.
   2. Single or parallel UL beamforming measurement capabilities,
   3. Scheduling enhancements to operate transmissions using measured spatial data.

As another example, WiFi beamforming can be adapted to use spatial beamforming and LBT measurements. As discussed above, current WiFi systems use "explicit" beamforming where the AP requests channel feedback from the STA, e.g., based on channel sounding procedures initiated with "Null Data Packet" (NDP) sent to remote STA users. The connected users measure the channel impulse response and respond to the WiFi AP with a beamforming frame that contains compressed feedback matrix. The WiFi AP is then able to use this information to compute the channel matrix, $\vec{H}_i$, for explicit beamforming to each STA.

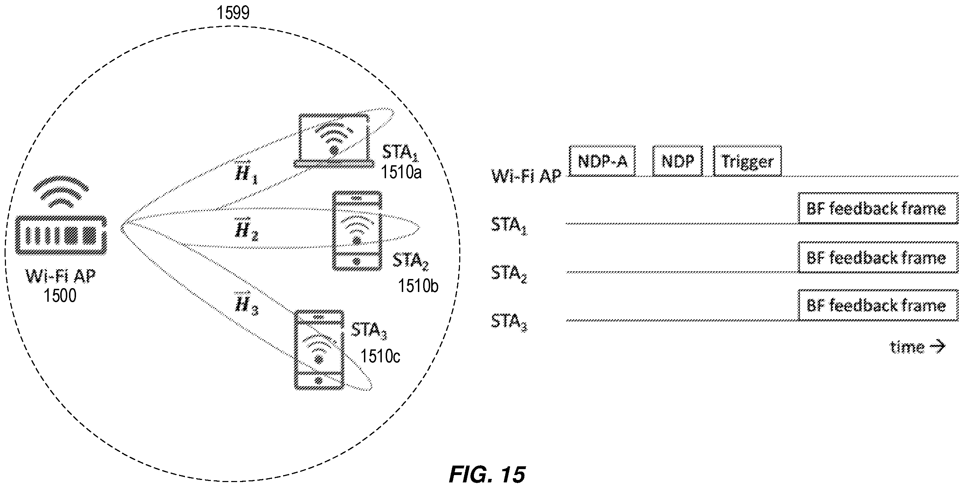

Figure 15 shows an exemplary beamforming procedure between an AP 1500 and three (3) STAs 1510a-c in a wireless network 1599. Since WiFi APs uses explicit beamforming, the procedure starts transmissions without beamforming knowledge. As such, the initiation messages - NDP-A, NDP, and Trigger - are all sent without being beamformed. Furthermore, these messages must follow standard LBT rules whereby received power is measured on all antennas without regard to spatial separation of STA users. Once the Wi-Fi AP has computed the various channel matrices $\vec{H}_i$, the beamforming data typically remains valid for 10-20ms for mobile pedestrian users, and 100ms or longer for stationary users. Before the end of the validity period, the AP must request updated beamforming feedback data from all connected users. Given the availability of the beamforming feedback, APs and connected users could potentially employ calculated channel matrices (e.g., derived from this feedback) to perform spatial LBT operations between the periodic beamforming feedback updates.

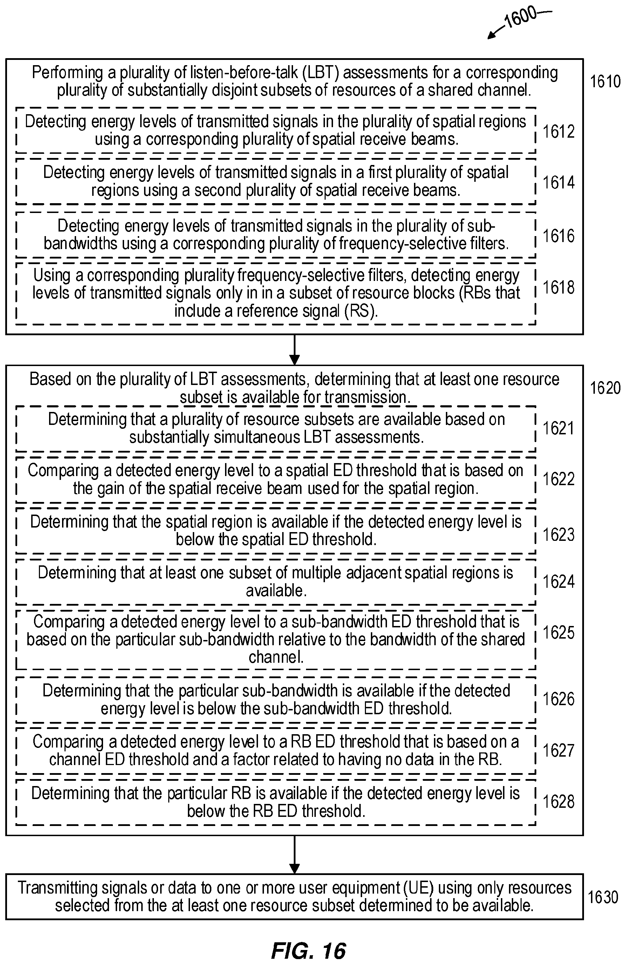

The embodiments described above can be further illustrated with reference to the exemplary method (e.g., procedure) shown in Figure 16, described below. Put differently, various features of the operations described below correspond to various embodiments described above.

In particular, Figure 16 illustrates an exemplary method (e.g., procedure) for transmitting data on a shared channel in a wireless network, in accordance with various exemplary embodiments of the present disclosure. The exemplary method can be performed by a network node (e.g., base station, gNB, eNB, en-gNB, ng-eNB, AP, etc., or component thereof) in the wireless network. For example, the shared channel can be in unlicensed spectrum (e.g., an unlicensed band). Although Figure 16 shows specific blocks arranged in a particular order, the operations corresponding to the blocks can be performed in different orders than shown and can be combined and/or divided into blocks having different functionality than shown. Optional blocks and/or operations are indicated by dashed lines.

The exemplary method can include the operations of block 1610, where the network node can perform a plurality of listen-before-talk (LBT) assessments for a corresponding plurality of substantially disjoint subsets of resources of a shared channel.

The exemplary method can also include the operations of block 1620, where the network node can, based on the plurality of LBT assessments, determine that at least one resource subset is available for transmission. This determination is based on a threshold related to the size of the resource subset. The exemplary method can also include the operations of block 1630, where the network node can transmit signals or data to one or more user equipment (UE) using only resources selected from the at least one resource subset determined to be available.

In some embodiments, the LBT assessments can be performed sequentially. In other embodiments, at least two of the LBT assessments (e.g., in block 1610) on corresponding at least two resource subsets can be performed substantially simultaneously (e.g., concurrently, in parallel, etc.). In such embodiments, the determining operations of block 1620 can include the operations of sub-block 1621, where the network node can determine that a plurality of resource subsets are available based on the substantially simultaneous LBT assessments. Moreover, in such embodiments, signals or data can be transmitted (e.g., in block 1630) substantially simultaneously to a corresponding plurality of UEs, where transmission to each UE uses a different one of the available resource subsets.

In some embodiments, the plurality of resource subsets can comprise a plurality of adjacent spatial regions having substantially non-overlapping ranges of azimuths and elevations. In such embodiments, the operations of block 1610 can include the operations of sub-block 1612, where the network node can detect energy levels of transmitted signals in the plurality of spatial regions using a corresponding plurality of spatial receive beams. Each spatial receive beam can selectively filter the corresponding spatial region.

In some of these embodiments, each spatial receive beam can be associated with a gain. For example, the associated gain for each spatial receive beam can be based on the range of azimuth and elevation for the spatial region. In some embodiments, the plurality of adjacent spatial regions can comprise a coverage area and, for each spatial region, the associated gain can be based on position of the spatial region relative to the center of the coverage area and size of the spatial region relative to the coverage area. This is exemplified by the arrangement shown in Figure 8, discussed above.

In some of these embodiments, the determining operations of block 1620 can include the operations of sub-blocks 1622-1623 for each spatial region. In sub-block 1622, the network node can compare a detected energy level to a spatial energy detection (ED) threshold that is based on the gain of the spatial receive beam used for the spatial region. In sub-block 1623, the network node can determine that the spatial region is available if the detected energy level is below the spatial ED threshold. For example, in each spatial region, the spatial ED threshold can be a channel ED threshold multiplied by the gain associated with the spatial receive beam used for the spatial region.

In some of these embodiments, the signals or data can be transmitted using respective spatial transmit beams corresponding to the spatial receive beams used for the LBT assessments in the spatial regions determined to be available. In some embodiments, the network node can be coupled to an antenna array comprising a plurality of antenna elements, and each spatial receive beam and corresponding spatial transmit beam can be formed based on selective weighting of the plurality of antenna elements. In some embodiments, each spatial receive beam and corresponding spatial transmit beam can be associated with a beamforming index. In other embodiments, each spatial receive beam and corresponding spatial transmit beam can be determined based on feedback from a UE.

In some embodiments, each spatial transmit beam can be associated with the spatial region of the corresponding spatial receive beam and a transmit power based on the gain associated with the corresponding spatial receive beam. As an example, for each spatial transmit beam, an associated spatial region can be a subset of the spatial region of the corresponding spatial receive beam. Furthermore, the subset can be based on one or more of the following differences with the corresponding spatial receive beam: transmit power that is less than the associated gain; and angular pattern (e.g., subset of azimuth and/or elevation range). An example of such embodiments is illustrated in Figure 14.

In some embodiments, the plurality of resource subsets can comprise a first plurality of adjacent spatial regions having substantially non-overlapping ranges of azimuths and elevations. In such embodiments, the operations of block 1610 can include the operations of sub-block 1614, where the network node can detect energy levels of transmitted signals in the first plurality of spatial regions using a second plurality of spatial receive beams. For example, each spatial receive beam can selectively filter a different subset of multiple adjacent spatial regions comprising the first plurality. This is exemplified by the AAS aggregate beam and AAS sector beams shown in Figure 13, discussed above.

In such embodiments, the determining operations of block 1620 can include the operations of sub-block 1624, where the network node can determine that at least one subset of multiple adjacent spatial regions is available. Furthermore, the signals or data can transmitted using one or more spatial transmit beams that correspond to respective one or more spatial regions within the at least one subset determined to be available. For example, in the context of Figure 13, if the network node determines that a subset of adjacent spatial regions covered by AAS sector beam 1 are available, it can transmit signals or data using any of the three transmit beams directed to spatial regions within that available subset (e.g., shown as directed to UEs 1-3). In some embodiments, each spatial transmit beam can have a coverage area that extends beyond a coverage area of a spatial receive beam used to determine availability of a subset that includes a range of azimuths and elevations associated with the spatial transmit beam.

In some embodiments, rather than (or in addition to) adjacent spatial regions, the plurality of resource subsets can comprise a plurality of sub-bandwidths within a bandwidth of the shared channel. For example, the plurality of sub-bandwidths can be substantially non-overlapping BWPs. In such embodiments, the operations of block 1610 can include the operations of sub-block 1614, where the network node can detect energy levels of transmitted signals in the plurality of sub-bandwidths using a corresponding plurality of frequency-selective filters.

In such embodiments, the determining operations of block 1620 can include the operations of sub-blocks 1625-1626. In sub-block 1625, the network node can compare a detected energy level to a sub-bandwidth ED threshold that is based on the particular sub-bandwidth relative to the bandwidth of the shared channel. In sub-block 1626, the network node can determine that the particular sub-bandwidth is available if the detected energy level is below the sub-bandwidth ED threshold. In such embodiments, the signals or data can be transmitted within one or more of the sub-bandwidths determined to be available.

In some of these embodiments, each sub-bandwidth can comprise a plurality of resource blocks (RBs), and the signals or data can include one or more reference signals (RS) that are transmitted without data in a subset of the RBs comprising each sub-bandwidth. An example of such RBs is shown in Figure 10. In such embodiments, the operations of block 1610 can include the operations of sub-block 1618, where the network node can, using a corresponding plurality frequency-selective filters, detect energy levels of transmitted signals only in in the subset of the RBs that include the RS.

In such embodiments, the determining operations of block 1620 can include the operations of sub-blocks 1627-1628. In sub-block 1627, the network node can compare a detected energy level to a RB ED threshold that is based on a channel ED threshold and a factor related to having no data in the RB. An example of such a factor is $RB_{OFF\_POWER\_DELTA}$, discussed above. In sub-block 1628, the network node can determine that the particular RB is available if the detected energy level is below the RB ED threshold.

Although various embodiments are described above in terms of methods, techniques, and/or procedures, the person of ordinary skill will readily comprehend that such methods, techniques, and/or procedures can be embodied by various combinations of hardware and software in various systems, communication devices, computing devices, control devices, apparatuses, non-transitory computer-readable media, computer program products, *etc.*

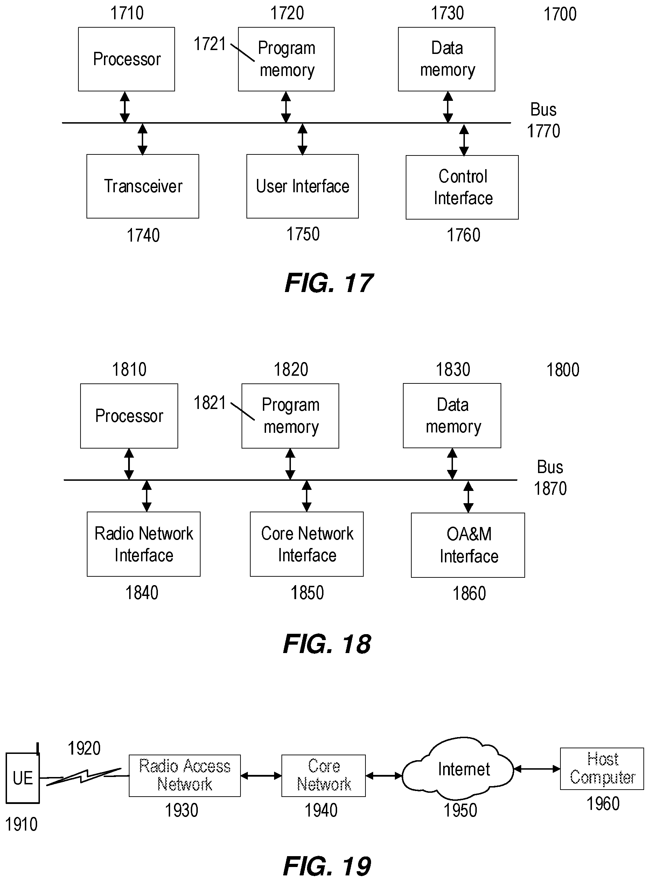

Figure 17 shows a block diagram of an exemplary wireless device or user equipment (UE) 1700 (hereinafter referred to as "UE 1700") according to various embodiments of the present disclosure, including those described above with reference to other figures. For example, UE 1700 can be configured by execution of instructions, stored on a computer-readable medium, to perform operations corresponding to one or more of the exemplary methods described herein.

UE 1700 can include a processor 1710 (also referred to as "processing circuitry") that can be operably connected to a program memory 1720 and/or a data memory 1730 via a bus 1770 that can comprise parallel address and data buses, serial ports, or other methods and/or structures known to those of ordinary skill in the art. Program memory 1720 can store software code, programs, and/or instructions (collectively shown as computer program product 1721 in Figure 17) that, when executed by processor 1710, can configure and/or facilitate UE 1700 to perform various operations, including operations corresponding to various exemplary methods described herein. As part of or in addition to such operations, execution of such instructions can configure and/or facilitate UE 1700 to communicate using one or more wired or wireless communication protocols, including one or more wireless communication protocols standardized by 3GPP, 3GPP2, or IEEE, such as those commonly known as 5G/NR, LTE, LTE-A, UMTS, HSPA, GSM, GPRS, EDGE, 1xRTT, CDMA2000, 802.11 WiFi, HDMI, USB, Firewire, *etc.*, or any other current or future protocols that can be utilized in conjunction with radio transceiver 1740, user interface 1750, and/or control interface 1760.

As another example, processor 1710 can execute program code stored in program memory 1720 that corresponds to MAC, RLC, PDCP, and RRC layer protocols standardized by 3GPP (*e.g.*, for NR and/or LTE). As a further example, processor 1710 can execute program code stored in program memory 1720 that, together with radio transceiver 1740, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA). As another example, processor 1710 can execute program code stored in program memory 1720 that, together with radio transceiver 1740, implements device-to-device (D2D) communications with other compatible devices and/or UEs.

Program memory 1720 can also include software code executed by processor 1710 to control the functions of UE 1700, including configuring and controlling various components such as radio transceiver 1740, user interface 1750, and/or control interface 1760. Program memory 1720 can also comprise one or more application programs and/or modules comprising computer-executable instructions embodying any of the exemplary methods described herein. Such software code can be specified or written using any known or future developed programming language, such as *e.g.,* Java, C++, C, Objective C, HTML, XHTML, machine code, and Assembler, as long as the desired functionality, e.g., as defined by the implemented method steps, is preserved. In addition, or as an alternative, program memory 1720 can comprise an external storage arrangement (not shown) remote from UE 1700, from which the instructions can be downloaded into program memory 1720 located within or removably coupled to UE 1700, so as to enable execution of such instructions.

Data memory 1730 can include memory area for processor 1710 to store variables used in protocols, configuration, control, and other functions of UE 1700, including operations corresponding to, or comprising, any of the exemplary methods described herein. Moreover, program memory 1720 and/or data memory 1730 can include non-volatile memory (e.g., flash memory), volatile memory (e.g., static or dynamic RAM), or a combination thereof. Furthermore, data memory 1730 can comprise a memory slot by which removable memory cards in one or more formats (e.g., SD Card, Memory Stick, Compact Flash, etc.) can be inserted and removed.

Persons of ordinary skill will recognize that processor 1710 can include multiple individual processors (including, e.g., multi-core processors), each of which implements a portion of the functionality described above. In such cases, multiple individual processors can be commonly connected to program memory 1720 and data memory 1730 or individually connected to multiple individual program memories and or data memories. More generally, persons of ordinary skill in the art will recognize that various protocols and other functions of UE 1700 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

Radio transceiver 1740 can include radio-frequency transmitter and/or receiver functionality that facilitates the UE 1700 to communicate with other equipment supporting like wireless communication standards and/or protocols. In some exemplary embodiments, the radio transceiver 1740 includes one or more transmitters and one or more receivers that enable UE 1700 to communicate according to various protocols and/or methods proposed for standardization by 3GPP and/or other standards bodies. For example, such functionality can operate cooperatively with processor 1710 to implement a PHY layer based on OFDM, OFDMA, and/or SC-FDMA technologies, such as described herein with respect to other figures.

In some exemplary embodiments, radio transceiver 1740 includes one or more transmitters and one or more receivers that can facilitate the UE 1700 to communicate with various LTE, LTE-Advanced (LTE-A), and/or NR networks according to standards promulgated by 3GPP. In some exemplary embodiments of the present disclosure, the radio transceiver 1740 includes circuitry, firmware, etc. necessary for the UE 1700 to communicate with various NR, NR-U, LTE, LTE-A, LTE-LAA, UMTS, and/or GSM/EDGE networks, also according to 3GPP standards. In some embodiments, radio transceiver 1740 can include circuitry supporting D2D communications between UE 1700 and other compatible devices.

In some embodiments, radio transceiver 1740 includes circuitry, firmware, etc. necessary for the UE 1700 to communicate with various CDMA2000 networks, according to 3GPP2 standards. In some embodiments, the radio transceiver 1740 can be capable of communicating using radio technologies that operate in unlicensed frequency bands, such as IEEE 802.11 WiFi that operates using frequencies in the regions of 2.4, 5.6, and/or 60 GHz. In some embodiments, radio transceiver 1740 can include a transceiver that is capable of wired communication, such as by using IEEE 802.3 Ethernet technology. The functionality particular to each of these embodiments can be coupled with and/or controlled by other circuitry in the UE 1700, such as the processor 1710 executing program code stored in program memory 1720 in conjunction with, and/or supported by, data memory 1730.

User interface 1750 can take various forms depending on the particular embodiment of UE 1700, or can be absent from UE 1700 entirely. In some embodiments, user interface 1750 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the UE 1700 can comprise a tablet computing device including a larger touchscreen display. In such embodiments, one or more of the mechanical features of the user interface 1750 can be replaced by comparable or functionally equivalent virtual user interface features (e.g., virtual keypad, virtual buttons, etc.) implemented using the touchscreen display, as familiar to persons of ordinary skill in the art. In other embodiments, the UE 1700 can be a digital computing device, such as a laptop computer, desktop computer, workstation, etc. that comprises a mechanical keyboard that can be integrated, detached, or detachable depending on the particular exemplary embodiment. Such a digital computing device can also comprise a touch screen display. Many exemplary embodiments of the UE 1700 having a touch screen display are capable of receiving user inputs, such as inputs related to exemplary methods described herein or otherwise known to persons of ordinary skill.

In some embodiments, UE 1700 can include an orientation sensor, which can be used in various ways by features and functions of UE 1700. For example, the UE 1700 can use outputs of the orientation sensor to determine when a user has changed the physical orientation of the UE 1700's touch screen display. An indication signal from the orientation sensor can be available to any application program executing on the UE 1700, such that an application program can change the orientation of a screen display (e.g., from portrait to landscape) automatically when the indication signal indicates an approximate ninety-degree change in physical orientation of the device. In this exemplary manner, the application program can maintain the screen display in a manner that is readable by the user, regardless of the physical orientation of the device. In addition, the output of the orientation sensor can be used in conjunction with various exemplary embodiments of the present disclosure.

A control interface 1760 of the UE 1700 can take various forms depending on the particular exemplary embodiment of UE 1700 and of the particular interface requirements of other devices that the UE 1700 is intended to communicate with and/or control. For example, the control interface 1760 can comprise an RS-232 interface, a USB interface, an HDMI interface, a Bluetooth interface, an IEEE ("Firewire") interface, an I$^2$C interface, a PCMCIA interface, or the like. In some exemplary embodiments of the present disclosure, control interface 1760 can comprise an IEEE 802.3 Ethernet interface such as described above. In some exemplary embodiments of the present disclosure, the control interface 1760 can comprise analog interface circuitry including, for example, one or more digital-to-analog converters (DACs) and/or analog-to-digital converters (ADCs).

Persons of ordinary skill in the art can recognize the above list of features, interfaces, and radio-frequency communication standards is merely exemplary, and not limiting to the scope of the present disclosure. In other words, the UE 1700 can comprise more functionality than is shown in Figure 17 including, for example, a video and/or still-image camera, microphone, media player and/or recorder, *etc.* Moreover, radio transceiver 1740 can include circuitry necessary to communicate using additional radio-frequency communication standards including Bluetooth, GPS, and/or others. Moreover, the processor 1710 can execute software code stored in the program memory 1720 to control such additional functionality. For example, directional velocity and/or position estimates output from a GPS receiver can be available to any application program executing on the UE 1700, including any program code corresponding to and/or embodying any exemplary embodiments (e.g., of methods) described herein.

Figure 18 shows a block diagram of an exemplary network node 1800 according to various embodiments of the present disclosure, including those described above with reference to other figures. For example, exemplary network node 1800 can be configured by execution of instructions, stored on a computer-readable medium, to perform operations corresponding to one or more of the exemplary methods described herein. In some exemplary embodiments, network node 1800 can comprise a base station, eNB, gNB, or one or more components thereof. For example, network node 1800 can be configured as a central unit (CU) and one or more distributed units (DUs) according to NR gNB architectures specified by 3GPP. More generally, the functionally of network node 1800 can be distributed across various physical devices and/or functional units, modules, *etc.*

Network node 1800 can include processor 1810 (also referred to as "processing circuitry") that is operably connected to program memory 1820 and data memory 1830 via bus 1870, which can include parallel address and data buses, serial ports, or other methods and/or structures known to those of ordinary skill in the art.

Program memory 1820 can store software code, programs, and/or instructions (collectively shown as computer program product 1821 in Figure 18) that, when executed by processor 1810, can configure and/or facilitate network node 1800 to perform various operations, including operations corresponding to various exemplary methods described herein. As part of and/or in addition to such operations, program memory 1820 can also include software code executed by processor 1810 that can configure and/or facilitate network node 1800 to communicate with one or more other UEs or network nodes using other protocols or protocol layers, such as one or more of the PHY, MAC, RLC, PDCP, and RRC layer protocols standardized by 3GPP for LTE, LTE-A, and/or NR, or any other higher-layer (e.g., NAS) protocols utilized in conjunction with radio network interface 1840 and/or core network interface 1850. By way of example, core network interface 1850 can comprise the S1 or NG interface and radio network interface 1840 can comprise the Uu interface, as standardized by 3GPP. Program memory 1820 can also comprise software code executed by processor 1810 to control the functions of network node 1800, including configuring and controlling various components such as radio network interface 1840 and core network interface 1850.

Data memory 1830 can comprise memory area for processor 1810 to store variables used in protocols, configuration, control, and other functions of network node 1800. As such, program memory 1820 and data memory 1830 can comprise non-volatile memory (e.g., flash memory, hard disk, *etc.),* volatile memory *(e.g.,* static or dynamic RAM), network-based *(e.g.,* "cloud") storage, or a combination thereof. Persons of ordinary skill in the art will recognize that processor 1810 can include multiple individual processors (not shown), each of which implements a portion of the functionality described above. In such case, multiple individual processors may be commonly connected to program memory 1820 and data memory 1830 or individually connected to multiple individual program memories and/or data memories. More generally, persons of ordinary skill will recognize that various protocols and other functions of network node 1800 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1840 can comprise transmitters, receivers, signal processors, ASICs, antennas, beamforming units, and other circuitry that enables network node 1800 to communicate with other equipment such as, in some embodiments, a plurality of compatible user equipment (UE). In some embodiments, interface 1840 can also enable network node 1800 to communicate with compatible satellites of a satellite communication network. In some exemplary embodiments, radio network interface 1840 can comprise various protocols or protocol layers, such as the PHY, MAC, RLC, PDCP, and/or RRC layer protocols standardized by 3GPP for LTE, LTE-A, LTE-LAA, NR, NR-U, *etc.*; improvements thereto such as described herein above; or any other higher-layer protocols utilized in conjunction with radio network interface 1840. According to further exemplary embodiments of the present disclosure, the radio network interface 1840 can comprise a PHY layer based on OFDM, OFDMA, and/or SC-FDMA technologies. In some embodiments, the functionality of such a PHY layer can be provided cooperatively by radio network interface 1840 and processor 1810 (including program code in memory 1820).

Core network interface 1850 can comprise transmitters, receivers, and other circuitry that enables network node 1800 to communicate with other equipment in a core network such as, in some embodiments, circuit-switched (CS) and/or packet-switched Core (PS) networks. In some embodiments, core network interface 1850 can comprise the S1 interface standardized by 3GPP. In some embodiments, core network interface 1850 can comprise the NG interface standardized by 3GPP. In some exemplary embodiments, core network interface 1850 can comprise one or more interfaces to one or more AMFs, SMFs, SGWs, MMEs, SGSNs, GGSNs, and other physical devices that comprise functionality found in GERAN, UTRAN, EPC, 5GC, and CDMA2000 core networks that are known to persons of ordinary skill in the art. In some embodiments, these one or more interfaces may be multiplexed together on a single physical interface. In some embodiments, lower layers of core network interface 1850 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

In some embodiments, network node 1800 can include hardware and/or software that configures and/or facilitates network node 1800 to communicate with other network nodes in a RAN, such as with other eNBs, gNBs, ng-eNBs, en-gNBs, IAB nodes, *etc.* Such hardware and/or software can be part of radio network interface 1840 and/or core network interface 1850, or it can be a separate functional unit (not shown). For example, such hardware and/or software can configure and/or facilitate network node 1800 to communicate with other RAN nodes via the X2 or Xn interfaces, as standardized by 3GPP.

OA&M interface 1860 can comprise transmitters, receivers, and other circuitry that enables network node 1800 to communicate with external networks, computers, databases, and the like for purposes of operations, administration, and maintenance of network node 1800 or other network equipment operably connected thereto. Lower layers of OA&M interface 1860 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some embodiments, one or more of radio network interface 1840, core network interface 1850, and OA&M interface 1860 may be multiplexed together on a single physical interface, such as the examples listed above.

Figure 19 is a block diagram of an exemplary communication network configured to provide over-the-top (OTT) data services between a host computer and a user equipment (UE), according to one or more exemplary embodiments of the present disclosure. UE 1910 can communicate with radio access network (RAN) 1930 over radio interface 1920, which can be based on protocols described above including, e.g., LTE, LTE-A, and 5G/NR. For example, UE 1910 can be configured and/or arranged as shown in other figures discussed above.

RAN 1930 can include one or more terrestrial network nodes *(e.g.,* base stations, eNBs, gNBs, controllers, *etc.)* operable in licensed spectrum bands, as well one or more network nodes operable in unlicensed spectrum (using, e.g., LAA or NR-U technology), such as a 2.4-GHz band and/or a 5-GHz band. In such cases, the network nodes comprising RAN 1930 can cooperatively operate using licensed and unlicensed spectrum. In some embodiments, RAN 1930 can include, or be capable of communication with, one or more satellites comprising a satellite access network.

RAN 1930 can further communicate with core network 1940 according to various protocols and interfaces described above. For example, one or more apparatus (e.g., base stations, eNBs, gNBs, *etc.)* comprising RAN 1930 can communicate to core network 1940 via core network interface 1950 described above. In some exemplary embodiments, RAN 1930 and core network 1940 can be configured and/or arranged as shown in other figures discussed above. For example, eNBs comprising an E-UTRAN 1930 can communicate with an EPC core network 1940 via an S1 interface. As another example, gNBs and ng-eNBs comprising an NG-RAN 1930 can communicate with a 5GC core network 1930 via an NG interface.

Core network 1940 can further communicate with an external packet data network, illustrated in Figure 19 as Internet 1950, according to various protocols and interfaces known to persons of ordinary skill in the art. Many other devices and/or networks can also connect to and communicate via Internet 1950, such as exemplary host computer 1960. In some exemplary embodiments, host computer 1960 can communicate with UE 1910 using Internet 1950, core network 1940, and RAN 1930 as intermediaries. Host computer 1960 can be a server *(e.g.,* an application server) under ownership and/or control of a service provider. Host computer 1960 can be operated by the OTT service provider or by another entity on the service provider's behalf.

For example, host computer 1960 can provide an over-the-top (OTT) packet data service to UE 1910 using facilities of core network 1940 and RAN 1930, which can be unaware of the routing of an outgoing/incoming communication to/from host computer 1960. Similarly, host computer 1960 can be unaware of routing of a transmission from the host computer to the UE, *e.g.,* the routing of the transmission through RAN 1930. Various OTT services can be provided using the exemplary configuration shown in Figure 19 including, e.g., streaming (unidirectional) audio and/or video from host computer to UE, interactive (bidirectional) audio and/or video between host computer and UE, interactive messaging or social communication, interactive virtual or augmented reality, *etc.*

The exemplary network shown in Figure 19 can also include measurement procedures and/or sensors that monitor network performance metrics including data rate, latency and other factors that are improved by exemplary embodiments disclosed herein. The exemplary network can also include functionality for reconfiguring the link between the endpoints (e.g., host computer and UE) in response to variations in the measurement results. Such procedures and functionalities are known and practiced; if the network hides or abstracts the radio interface from the OTT service provider, measurements can be facilitated by proprietary signaling between the UE and the host computer.

The exemplary embodiments described herein provide a competitive enhancement (e.g., compared to conventional LAA techniques or licensed-only deployments) when employed in high capacity scenarios. For example, such embodiments facilitate using spatial LBT etiquette in these systems to increase transmission opportunities while not deleteriously impacting other devices in the shared spectrum or unlicensed bands. As such, exemplary embodiments can facilitate a network node to receive and transmit using narrow antenna beams within a high-traffic-density venue (e.g., stadium or arena), without impacting other co-existing AAS radio transceivers, by using orthogonal non-overlapping beams.. For example, these techniques can be used by a network node *(e.g.,* gNB) comprising RAN 1930 when communicating with UE 1910. When used in NR-U capable gNBs comprising RAN 1930 in this manner, such embodiments can improve data throughput in a coverage area and enable a greater number of users to utilize data-intensive services such as streaming video in various coverage conditions without excessive power consumption or other degradations to user experience. In this manner, exemplary embodiments facilitate UE 1910 and RAN 1930 to fulfill requirements of the particular OTT service between host computer 1960 and UE 1910.

The foregoing merely illustrates the principles of the disclosure. Various modifications and alterations to the described embodiments will be apparent to those skilled in the art in view of the teachings herein. Various exemplary embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (e.g., "data" and "information"). It should be understood, that although these terms (and/or other terms that can be synonymous to one another) can be used synonymously herein, there can be instances when such words can be intended to not be used synonymously.

**Claims**

1. A method (1600), performed by a network node, for transmitting data on a shared channel in a wireless network, the method comprising:

    performing (1610) a plurality of listen-before-talk, LBT, assessments for a corresponding plurality of substantially disjoint subsets of resources of a shared channel;
    based on the plurality of LBT assessments and on respective thresholds related to respective sizes of the plurality of resource subsets, determining (1620) that at least one resource subset is available for transmission; and
    transmitting (1630) signals or data to one or more user equipment, UE, using only resources selected from the at least one resource subset determined to be available.

2. The method of claim 1, wherein

    i) at least two of the LBT assessments on corresponding at least two resource subsets are performed substantially simultaneously; and, optionally, wherein:

        determining (1620) that at least one resource subset is available comprises determining that a plurality of resource subsets are available based on the substantially simultaneous LBT assessments;
        signals or data is transmitted substantially simultaneously to a corresponding plurality of UEs; and
        transmission to each UE uses a different one of the available resource subsets; or

    ii) wherein the LBT assessments are performed sequentially.

3. The method of any of claims 1-2, wherein:

    the plurality of resource subsets comprises a plurality of adjacent spatial regions having substantially non-overlapping ranges of azimuths and elevations;
    performing (1610) the plurality of LBT assessments comprises detecting (1612) energy levels of transmitted signals in the plurality of spatial regions using a corresponding plurality of spatial receive beams; and
    each spatial receive beam selectively filters the corresponding spatial region.

4. The method of claim 3, wherein:

    each spatial receive beam is associated with a gain; and
    determining (1620) that at least one resource subset is available comprises, for each spatial region:

        comparing (1622) a detected energy level to a spatial energy detection, ED, threshold that is based on the gain of the spatial receive beam used for the spatial region; and
        determining (1623) that the spatial region is available if the detected energy level is below the spatial ED threshold; and, optionally, wherein:

            i) for each spatial region, the spatial ED threshold is a channel ED threshold multiplied by the gain associated with the spatial receive beam used for the spatial region; and/or
            ii) for each spatial receive beam, the associated gain is based on the range of azimuth and elevation for the spatial region; and, further optionally, wherein:

        the plurality of adjacent spatial regions comprise a coverage area; and
        for each spatial region, the associated gain is based on:

            position of the spatial region relative to the center of the coverage area; and
            size of the spatial region relative to the coverage area.

5. The method of any of claims 3-4, wherein the signals or data is transmitted using respective spatial transmit beams corresponding to the spatial receive beams used for the LBT assessments in the spatial regions determined to be available; and, optionally, wherein

i) each spatial receive beam and corresponding spatial transmit beam is associated with a beamforming index; or
ii) each spatial receive beam and corresponding spatial transmit beam is determined based on feedback from a UE.

6. The method of claim 5, wherein each spatial transmit beam is associated with:

the spatial region of the corresponding spatial receive beam; and
a transmit power based on the gain associated with the corresponding spatial receive beam; and, optionally, wherein:

for each spatial transmit beam, an associated spatial region is a subset of the spatial region of the corresponding spatial receive beam; and
the subset is based on one or more of the following differences with the corresponding spatial receive beam:

transmit power that is less than the associated gain; and
angular pattern.

7. The method of any of claims 5-6, wherein:

the network node is coupled to an antenna array comprising a plurality of antenna elements; and
each spatial receive beam and corresponding spatial transmit beam is formed based on selective weighting of the plurality of antenna elements.

8. The method of any of claims 1-2, wherein:

the plurality of resource subsets comprises a first plurality of adjacent spatial regions having substantially non-overlapping ranges of azimuths and elevations;
performing (1610) the plurality of LBT assessments comprises detecting (1614) energy levels of transmitted signals in the first plurality of spatial regions using a second plurality of spatial receive beams; and
each spatial receive beam selectively filters a different subset of multiple adjacent spatial regions comprising the first plurality; and, optionally, wherein:

i) determining (1620) that at least one resource subset is available comprises determining (1624) that at least one subset of multiple adjacent spatial regions is available; and
the signals or data are transmitted using one or more spatial transmit beams that correspond to respective one or more spatial regions within the at least one subset determined to be available; and/or
ii) each spatial transmit beam has a coverage area that extends beyond a coverage area of a spatial receive beam used to determine availability of a subset that includes a range of azimuths and elevations associated with the spatial transmit beam.

9. The method of claims 1-2, wherein:

the plurality of resource subsets comprises a plurality of sub-bandwidths within a bandwidth of the shared channel; and
performing (1610) the plurality of LBT assessments comprises detecting (1616) energy levels of transmitted signals in the plurality of sub-bandwidths using a corresponding plurality of frequency-selective filters.

10. The method of claim 9, wherein

i) determining (1620) that at least one resource subset is available comprises, for each sub-bandwidth:

comparing (1625) a detected energy level to a sub-bandwidth energy detection, ED, threshold that is based on the particular sub-bandwidth relative to the bandwidth of the shared channel; and
determining (1626) that the particular sub-bandwidth is available if the detected energy level is below the sub-bandwidth ED threshold; and, optionally,
wherein the signals or data is transmitted within one or more of the sub-bandwidths determined to be available; or

ii) each sub-bandwidth comprises a plurality of resource blocks, RBs;

the signals or data include one or more reference signals, RS, that are transmitted without data in a subset of the RBs comprising each sub-bandwidth; and

performing (1610) the plurality of LBT assessments comprises, using a corresponding plurality frequency-selective filters, detecting (1618) energy levels of transmitted signals only in in the subset of the RBs that include the RS; and, optionally,

wherein determining (1620) that at least one resource subset is available comprises, for each RB that includes a RS:

comparing (1627) a detected energy level to a RB energy detection (ED) threshold that is based on a channel ED threshold and a factor related to having no data in the RB; and

determining (1628) that the particular RB is available if the detected energy level is below the RB ED threshold.

11. The method of any of claims 1-10, wherein the network node is any of the following: an LTE eNB, an NR gNB, or a WiFi access point.

12. A network node (200, 250, 310, 320, 1100, 1500, 1800) configured to transmit data on a shared channel in a wireless network (299, 399, 1599, 1930), the network node being further arranged to perform operations corresponding to any of the methods of claims 1-11.

13. The network node of claim 12, wherein the network node is further configured to:

communicate with one or more other nodes (330, 1110, 1510, 1700) in the wireless network via an antenna array comprising a plurality of antenna elements; and

selectively weight the plurality of antenna elements to generate one or more spatial receive beams and corresponding spatial transmit beams.

14. A non-transitory, computer-readable medium (1820) storing computer-executable instructions that, when executed by processing circuitry (1810) of a network node (200, 250, 310, 320, 1100, 1500, 1800) in a wireless network (299, 399, 1599, 1930), configure the network node to perform operations corresponding to any of the methods of claims 1-11.

15. A computer program product (1821) comprising computer-executable instructions that, when executed by processing circuitry (1810) of a network node (200, 250, 310, 320, 1100, 1500, 1800) in a wireless network (299, 399, 1599, 1930), configure the network node to perform operations corresponding to any of the methods of claims 1-11.

**Patentansprüche**

1. Verfahren (1600), das von einem Netzwerkknoten durchgeführt wird, zur Übertragung von Daten auf einem gemeinsamen Kanal in einem drahtlosen Netzwerk, wobei das Verfahren umfasst:

Durchführen (1610) einer Mehrzahl von Horchen-vor-Sprechen-,LBT-,Beurteilungen für eine entsprechende Mehrzahl von im Wesentlichen disjunkten Teilmengen von Ressourcen eines gemeinsamen Kanals;

Bestimmen (1620), dass mindestens eine Ressourcenteilmenge zur Übertragung verfügbar ist, basierend auf der Mehrzahl von LBT-Beurteilungen und auf jeweiligen Schwellen in Bezug auf jeweilige Größen der Mehrzahl von Ressourcenteilmengen; und

Senden (1630) von Signalen oder Daten an eine oder mehrere Benutzereinrichtungen, UE, nur unter Verwendung von Ressourcen, die aus der mindestens einen Ressourcenteilmenge ausgewählt werden, die als verfügbar bestimmt wird.

2. Verfahren nach Anspruch 1, wobei

i) mindestens zwei der LBT-Beurteilungen an mindestens zwei entsprechenden Ressourcenteilmengen im Wesentlichen gleichzeitig durchgeführt werden, und wobei optional:

das Bestimmen (1620), dass mindestens eine Ressourcenteilmenge verfügbar ist, ein Bestimmen basierend auf den im Wesentlichen gleichzeitigen LBT-Beurteilungen umfasst, dass eine Mehrzahl von Ressourcenteilmengen verfügbar ist;

Signale oder Daten im Wesentlichen gleichzeitig an eine entsprechende Mehrzahl von UEs übertragen werden; und

Übertragung an jede UE eine unterschiedliche der verfügbaren Ressourcenteilmengen verwendet; oder

ii) wobei die LBT-Beurteilungen nacheinander durchgeführt werden.

3. Verfahren nach einem der Ansprüche 1 bis 2, wobei:

die Mehrzahl von Ressourcenteilmengen eine Mehrzahl von benachbarten räumlichen Regionen mit im Wesentlichen nichtüberlappenden Bereichen von Azimuts und Elevationen umfasst;

das Durchführen (1610) der Mehrzahl von LBT-Beurteilungen ein Detektieren (1612) von Energieniveaus von übertragenen Signalen in der Mehrzahl von räumlichen Regionen unter Verwendung einer entsprechenden Mehrzahl von räumlichen Empfangsstrahlen umfasst; und

jeder räumliche Empfangsstrahl die entsprechende räumliche Region selektiv filtert.

4. Verfahren nach Anspruch 3, wobei:

jeder räumliche Empfangsstrahl mit einer Verstärkung assoziiert ist; und

das Bestimmen (1620), dass mindestens eine Ressourcenteilmenge verfügbar ist, für jede räumliche Region umfasst:

Vergleichen (1622) eines detektierten Energieniveaus mit einer Schwelle einer räumlichen Energiedetektion, ED, die auf der Verstärkung des räumlichen Empfangsstrahls basiert, der für die räumliche Region verwendet wird; und

Bestimmen (1623), dass die räumliche Region verfügbar ist, wenn das detektierte Energieniveau unter der Schwelle der räumlichen ED ist; und wobei optional:

i) die Schwelle der räumlichen ED für jede räumliche Region eine Kanal-ED-Schwelle multipliziert mit der Verstärkung ist, die mit dem räumlichen Empfangsstrahl assoziiert ist, der für die räumliche Region verwendet wird; und/oder

ii) die assoziierte Verstärkung für jeden räumlichen Empfangsstrahl auf dem Bereich von Azimut und Elevation für die räumliche Region basiert; und wobei ferner optional:

die Mehrzahl von benachbarten räumlichen Regionen einen Versorgungsbereich umfasst; und

die assoziierte Verstärkung für jede räumliche Region basiert auf:

einer Position der räumlichen Region in Bezug auf die Mitte des Versorgungsbereichs; und

einer Größe der räumlichen Region in Bezug auf den Versorgungsbereich.

5. Verfahren nach einem der Ansprüche 3 bis 4, wobei die Signale oder Daten unter Verwendung jeweiliger räumliche Sendestrahlen gesendet werden, die den räumlichen Empfangsstrahlen entsprechen, die für die LBT-Beurteilungen in den räumlichen Regionen verwendet werden, die als verfügbar bestimmt werden; und wobei optional:

i) jeder räumliche Empfangsstrahl und jeder entsprechende räumliche Sendestrahl mit einem Strahlformungsindex assoziiert sind; oder

ii) jeder räumliche Empfangsstrahl und jeder entsprechende räumliche Sendestrahl basierend auf einer Rückmeldung von einer UE bestimmt werden.

6. Verfahren nach Anspruch 5, wobei jeder räumliche Sendestrahl assoziiert ist mit:

der räumlichen Region des entsprechenden räumlichen Empfangsstrahls; und

einer Sendeleistung, die auf der Verstärkung basiert, die mit dem entsprechenden räumlichen Empfangsstrahl assoziiert ist; und wobei optional:

für jeden räumlichen Sendestrahl eine assoziierte räumliche Region eine Teilmenge der räumlichen Region des entsprechenden räumlichen Empfangsstrahls ist; und
die Teilmenge auf einem oder mehreren der folgenden Unterschiede zum entsprechenden räumlichen Empfangsstrahl basiert:

Sendeleistung, die niedriger als die assoziierte Verstärkung ist; und
Winkelmuster.

7. Verfahren nach einem der Ansprüche 5 bis 6, wobei:

der Netzwerkknoten mit einer Antennengruppe gekoppelt ist, die eine Mehrzahl von Antennenelementen umfasst; und
jeder räumliche Empfangsstrahl und jeder entsprechende räumliche Sendestrahl basierend auf einer selektiven Gewichtung der Mehrzahl von Antennenelementen gebildet werden.

8. Verfahren nach einem der Ansprüche 1 bis 2, wobei:

die Mehrzahl von Ressourcenteilmengen eine erste Mehrzahl von benachbarten räumlichen Regionen mit im Wesentlichen nichtüberlappenden Bereichen von Azimuts und Elevationen umfasst;
das Durchführen (1610) der Mehrzahl von LBT-Beurteilungen ein Detektieren (1614) von Energieniveaus von gesendeten Signalen in der ersten Mehrzahl von räumlichen Regionen unter Verwendung einer zweiten Mehrzahl von räumlichen Empfangsstrahlen umfasst; und
jeder räumliche Empfangsstrahl selektiv eine verschiedene Teilmenge von mehreren benachbarten räumlichen Regionen filtert, welche die erste Mehrzahl umfasst; und wobei optional:

i) das Bestimmen (1620), dass mindestens eine Ressourcenteilmenge verfügbar ist, ein Bestimmen (1624) umfasst, dass mindestens eine Teilmenge von mehreren benachbarten räumlichen Regionen verfügbar ist; und
die Signale oder Daten unter Verwendung eines oder mehrerer räumlicher Sendestrahlen gesendet werden, die einer oder mehreren jeweiligen räumlichen Regionen innerhalb der mindestens einen Teilmenge entsprechen, die als verfügbar bestimmt wird; und/oder
ii) jeder räumliche Sendestrahl einen Versorgungsbereich aufweist, der sich über einen Versorgungsbereich eines räumlichen Empfangsstrahls hinaus erstreckt, der zum Bestimmen der Verfügbarkeit einer Teilmenge verwendet wird, die einen Bereich von Azimuts und Elevationen umfasst, der mit dem räumlichen Sendestrahl assoziiert ist.

9. Verfahren nach Anspruch 1 bis 2, wobei:

die Mehrzahl von Ressourcenteilmengen eine Mehrzahl von Teilbandbreiten innerhalb einer Bandbreite des gemeinsamen Kanals umfasst; und
das Durchführen (1610) der Mehrzahl von LBT-Beurteilungen ein Detektieren (1616) von Energieniveaus von gesendeten Signalen in der Mehrzahl von Teilbandbreiten unter Verwendung einer entsprechenden Mehrzahl von frequenzselektiven Filtern umfasst.

10. Verfahren nach Anspruch 9, wobei

(i) das Bestimmen (1620), dass mindestens eine Ressourcenteilmenge verfügbar ist, für jede Teilbandbreite umfasst:

Vergleichen (1625) eines detektierten Energieniveaus mit einer Schwelle einer Teilbandbreiten-Energiedetektion, ED, die auf der spezifischen Teilbandbreite in Bezug auf die Bandbreite des gemeinsamen Kanals basiert; und
Bestimmen (1626), dass die spezifische Teilbandbreite verfügbar ist, wenn das detektierte Energieniveau unter der Teilbandbreiten-ED-Schwelle ist; und optional
wobei die Signale oder Daten innerhalb einer oder mehrerer der Teilbandbreiten gesendet werden, die als verfügbar bestimmt werden; oder

ii) jede Teilbandbreite eine Mehrzahl von Ressourcenblöcken, RBs, umfasst;

die Signale oder Daten ein oder mehrere Referenzsignale, RS, umfassen, die ohne Daten in einer Teilmenge der RBs gesendet werden, die jede Teilbandbreite umfassen; und

das Durchführen (1610) der Mehrzahl von LBT-Beurteilungen ein Detektieren (1618) von Energieniveaus von gesendeten Signalen nur in der Teilmenge der RBs, welche das RS enthalten, unter Verwendung einer entsprechenden Mehrzahl von frequenzselektiven Filtern umfasst; und optional wobei das Bestimmen (1620), dass mindestens eine Ressourcenteilmenge verfügbar ist, für jeden RB, der ein RS enthält, umfasst:

Vergleichen (1627) eines detektierten Energieniveaus mit einer Schwelle einer RB-Energiedetektion (ED), die auf einer Kanal-ED-Schwelle und einem Faktor umfasst, der damit in Beziehung steht, dass keine Daten im RB vorhanden sind; und

Bestimmen (1628), dass der spezifische RB verfügbar ist, wenn das detektierte Energieniveau unter der RB-ED-Schwelle ist.

11. Verfahren nach einem der Ansprüche 1 bis 10, wobei der Netzwerkknoten einer von Folgenden ist: ein LTE-eNB, ein NR-gNB oder ein WiFi-Zugangspunkt.

12. Netzwerkknoten (200, 250, 310, 320, 1100, 1500, 1800), der zum Senden von Daten auf einem gemeinsamen Kanal in einem drahtlosen Netzwerk (299, 399, 1599, 1930) konfiguriert ist, wobei der Netzwerkknoten ferner zum Durchführen von Operationen ausgelegt ist, die einem der Verfahren nach Anspruch 1 bis 11 entsprechen.

13. Netzwerkknoten nach Anspruch 12, wobei der Netzwerkknoten ferner konfiguriert ist zum:

Kommunizieren mit einem oder mehreren anderen Knoten (330, 1110, 1510, 1700) im drahtlosen Netzwerk über eine Antennengruppe, die eine Mehrzahl von Antennenelementen umfasst; und

selektiven Gewichten der Mehrzahl von Antennenelementen, um einen oder mehrere räumliche Empfangsstrahlen und einen oder mehrere entsprechende räumliche Sendestrahlen zu erzeugen.

14. Nicht-transitorisches, computerlesbares Medium (1820), das computerausführbare Anweisungen speichert, die bei Ausführung durch Verarbeitungsschaltungsanordnung (1810) eines Netzwerkknotens (200, 250, 310, 320, 1100, 1500, 1800) in einem drahtlosen Netzwerk (299, 399, 1599, 1930) den Netzwerkknoten zum Durchführen von Operationen konfigurieren, die einem der Verfahren nach Anspruch 1 bis 11 entsprechen.

15. Computerprogrammprodukt (1821), umfassend computerausführbare Anweisungen, die bei Ausführung durch Verarbeitungsschaltungsanordnung (1810) eines Netzwerkknotens (200, 250, 310, 320, 1100, 1500, 1800) in einem drahtlosen Netzwerk (299, 399, 1599, 1930) den Netzwerkknoten zum Durchführen von Operationen konfigurieren, die einem der Verfahren nach Anspruch 1 bis 11 entsprechen.

## Revendications

1. Procédé (1600), réalisé par un nœud de réseau, pour transmettre des données sur un canal partagé dans un réseau sans fil, le procédé comprenant :

la réalisation (1610) d'une pluralité d'évaluations écoute avant émission, LBT, pour une pluralité correspondante de sous-ensembles sensiblement disjoints de ressources d'un canal partagé ;

sur la base de la pluralité d'évaluations LBT et de seuils respectifs liés à des tailles respectives de la pluralité de sous-ensembles de ressources, la détermination (1620) qu'au moins un sous-ensemble de ressources est disponible pour une transmission ; et

la transmission (1630) de signaux ou de données à un ou plusieurs équipements utilisateur, UE, en utilisant uniquement des ressources sélectionnées parmi l'au moins un sous-ensemble de ressources déterminé comme étant disponible.

2. Procédé selon la revendication 1, dans lequel

i) au moins deux des évaluations LBT sur au moins deux sous-ensembles de ressources correspondants sont réalisées sensiblement simultanément ; et facultativement dans lequel :

la détermination (1620) qu'au moins un sous-ensemble de ressources est disponible comprend la détermination qu'une pluralité de sous-ensembles de ressources sont disponibles sur la base des évaluations LTB sensiblement simultanées ;

des signaux ou des donnés sont transmis sensiblement simultanément à une pluralité correspondante d'UE ; et

une transmission à chaque UE utilise l'un différent des sous-ensembles de ressources disponibles ; ou

ii) dans lequel les évaluations LBT sont réalisées séquentiellement.

**3.** Procédé selon la revendication 1 ou 2, dans lequel :

la pluralité de sous-ensembles de ressources comprend une pluralité de régions spatiales adjacentes comportant des plages qui ne se chevauchent sensiblement pas d'azimuts et d'élévations ;

la réalisation (1610) de la pluralité d'évaluations LBT comprend la détection (1612) de niveaux d'énergie de signaux transmis dans la pluralité de régions spatiales en utilisant une pluralité correspondante de faisceaux de réception spatiaux ; et

chaque faisceau de réception spatial filtre sélectivement la région spatiale correspondante.

**4.** Procédé selon la revendication 3, dans lequel :

chaque faisceau de réception spatial est associé à un gain ; et

la détermination (1620) qu'au moins un sous-ensemble de ressources est disponible comprend, pour chaque région spatiale :

la comparaison (1622) d'un niveau d'énergie détectée à un seuil de détection d'énergie, ED, spatiale qui est basé sur le gain du faisceau de réception spatial utilisé pour la région spatiale ; et

la détermination (1623) que la région spatiale est disponible si le niveau d'énergie détectée est inférieur au seuil d'ED spatiale ; et facultativement dans lequel :

i) pour chaque région spatiale, le seuil d'ED spatiale est un seuil d'ED de canal multiplié par le gain associé au faisceau de réception spatial utilisé pour la région spatiale ; et/ou

ii) pour chaque faisceau de réception spatial, le gain associé est basé sur la plage d'azimuts et d'élévations pour la région spatiale ; et en outre facultativement dans lequel :

la pluralité de régions spatiales adjacentes comprend une zone de couverture ; et

pour chaque région spatiale, le gain associé est basé sur :

une position de la région spatiale par rapport au centre de la zone de couverture ; et

une taille de la région spatiale par rapport à la zone de couverture.

**5.** Procédé selon la revendication 3 ou 4, dans lequel les signaux ou les données sont transmis en utilisant des faisceaux de transmission spatiaux respectifs correspondant aux faisceaux de réception spatiaux utilisés pour les évaluations LBT dans les régions spatiales déterminées comme étant disponibles ; et facultativement dans lequel

i) chaque faisceau de réception spatial et le faisceau de transmission spatial correspondant sont associés à un indice de formation de faisceau ; ou

ii) chaque faisceau de réception spatial et le faisceau de transmission spatial correspondant sont déterminés sur la base d'une rétroaction depuis un UE.

**6.** Procédé selon la revendication 5, dans lequel chaque faisceau de transmission spatial est associé à :

la région spatiale du faisceau de réception spatial correspondant ; et

une puissance de transmission sur la base du gain associé au faisceau de réception spatial correspondant ; et facultativement dans lequel :

pour chaque faisceau de transmission spatial, une région spatiale associée est un sous-ensemble de la région spatiale du faisceau de réception spatial correspondant ; et

le sous-ensemble est basé sur une ou plusieurs parmi les différences suivantes avec le faisceau de réception spatial correspondant :

une puissance de transmission qui est inférieure au gain associé ; et
un motif angulaire.

7. Procédé selon la revendication 5 ou 6, dans lequel :

le nœud de réseau est couplé à un réseau d'antennes comprenant une pluralité d'éléments d'antenne ; et
chaque faisceau de réception spatial et le faisceau de transmission spatial correspondant sont formés sur la base d'une pondération sélective de la pluralité d'éléments d'antenne.

8. Procédé selon la revendication 1 ou 2, dans lequel :

la pluralité de sous-ensembles de ressources comprend une première pluralité de régions spatiales adjacentes comportant des plages qui ne se chevauchent sensiblement pas d'azimuts et d'élévations ;
la réalisation (1610) de la pluralité d'évaluations LBT comprend la détection (1614) de niveaux d'énergie de signaux transmis dans la première pluralité de régions spatiales en utilisant une deuxième pluralité de faisceaux de réceptions spatiaux ; et
chaque faisceau de réception spatial filtre sélectivement un sous-ensemble différent de régions spatiales adjacentes multiples comprenant la première pluralité ; et facultativement dans lequel :

i) la détermination (1620) qu'au moins un sous-ensemble de ressources est disponible comprend la détermination (1624) qu'au moins un sous-ensemble de régions spatiales adjacentes multiples est disponible ; et les signaux ou les données sont transmis en utilisant un ou plusieurs faisceaux de transmission spatiaux correspondant à une ou plusieurs régions spatiales respectives à l'intérieur de l'au moins un sous-ensemble déterminé comme étant disponible ; et/ou

ii) chaque faisceau de transmission spatial comporte une zone de couverture qui s'étend au-delà d'une zone de couverture d'un faisceau de réception spatial utilisé pour déterminer une disponibilité d'un sous-ensemble qui inclut une plage d'azimuts et d'élévations associée au faisceau de transmission spatial.

9. Procédé selon la revendication 1 ou 2, dans lequel :

la pluralité de sous-ensembles de ressources comprend une pluralité de sous-bandes passantes à l'intérieur d'une bande passante du canal partagé ; et
la réalisation (1610) de la pluralité d'évaluations LBT comprend la détection (1616) de niveaux d'énergie de signaux transmis dans la pluralité de sous-bandes passantes en utilisant une pluralité correspondante de filtres de sélection de fréquence.

10. Procédé selon la revendication 9, dans lequel

i) la détermination (1620) qu'au moins un sous-ensemble de ressources est disponible comprend, pour chaque sous-bande passante :

la comparaison (1625) d'un niveau d'énergie détectée à un seuil de détection d'énergie, ED, de sous-bande passante qui est basé sur la sous-bande passante particulière par rapport à la bande passante du canal partagé ; et
la détermination (1626) que la sous-bande passante particulière est disponible si le niveau d'énergie détectée est inférieur au seuil d'ED de sous-bande passante ; et facultativement
dans lequel les signaux ou les données sont transmis à l'intérieur d'une ou plusieurs des sous-bandes passantes déterminées comme étant disponibles ; ou

ii) chaque sous-bande passante comprend une pluralité de blocs de ressources, RB ;

les signaux ou les données incluent un ou plusieurs signaux de référence, RS, qui sont transmis sans des données dans un sous-ensemble des RB comprenant chaque sous-bande passante ; et
la réalisation (1610) de la pluralité d'évaluations LBT comprend, en utilisant une pluralité correspondante de filtres de sélection de fréquence, la détection (1618) de niveaux d'énergie de signaux transmis uniquement dans le sous-ensemble des RB incluant le RS ; et facultativement
dans lequel la détermination (1620) qu'au moins un sous-ensemble de ressources est disponible comprend, pour chaque RB incluant un RS :

la comparaison (1627) d'un niveau d'énergie détectée à un seuil de détection d'énergie (ED) de RB qui est basé sur un seuil d'ED de canal et un facteur lié à l'absence de données dans le RB ; et
la détermination (1628) que le RB particulier est disponible si le niveau d'énergie détectée est inférieur au seuil d'ED de RB.

11. Procédé selon l'une quelconque des revendications 1 à 10, dans lequel le nœud de réseau est l'un quelconque parmi : un eNB LTE, un gNB NR ou un point d'accès Wi-Fi.

12. Nœud de réseau (200, 250, 310, 320, 1100, 1500, 1800) configuré pour transmettre des données sur un canal partagé dans un réseau sans fil (299, 399, 1599, 1930), le nœud de réseau étant en outre agencé pour réaliser des opérations correspondant à l'un quelconque des procédés selon les revendications 1 à 11.

13. Nœud de réseau selon la revendication 12, dans lequel le nœud de réseau est en outre configuré pour :

   communiquer avec un ou plusieurs autres nœuds (330, 1110, 1510, 1700) dans le réseau sans fil par l'intermédiaire d'un réseau d'antennes comprenant une pluralité d'éléments d'antenne ; et
   pondérer sélectivement la pluralité d'éléments d'antenne pour générer un ou plusieurs faisceaux de réception spatiaux et des faisceaux de transmission spatiaux correspondants.

14. Support lisible par ordinateur non transitoire (1820) stockant des instructions exécutables par ordinateur qui, lorsqu'elles sont exécutées par une circuiterie de traitement (1810) d'un nœud de réseau (200, 250, 310, 320, 1100, 1500, 1800) dans un réseau sans fil (299, 399, 1599, 1930), configurent le nœud de réseau pour réaliser des opérations correspondant à l'un quelconque des procédés selon les revendications 1 à 11.

15. Produit de programme d'ordinateur (1821) comprenant des instructions exécutables par ordinateur qui, lorsqu'elles sont exécutées par une circuiterie de traitement (1810) d'un nœud de réseau (200, 250, 310, 320, 1100, 1500, 1800) dans un réseau sans fil (299, 399, 1599, 1930), configurent le nœud de réseau pour réaliser des opérations correspondant à l'un quelconque des procédés selon les revendications 1 à 11.

**FIG. 1A**

**FIG. 1B**

**FIG. 2**

**FIG. 3**

PRB N3
o
PRB1
PRB0

Carrier bandwidth part 2

$N_{BWP}^2$

PRB N2
o
PRB1
PRB0

Carrier bandwidth part 1

Carrier
bandwidth

$N_{BWP}^1$

PRB N1
o
PRB1
PRB0

Carrier bandwidth part 0

PRB 0 within a carrier bandwidth

$N_{BWP}^0$

CRB0

PRB 0 in Reference Resource Block

PRB-index-DL-common for a Pcell downlink
PRB-index-UL-common for a Pcell uplink
PRB-index-DL-Dedicated for an Scell downlink
PRB-index-UL-Dedicated for an Scell uplink
PRB-index-SUL-common for a supplemental uplink

*FIG. 4*

**FIG. 5**

**FIG. 6A**

Symbol, Tsymb

Slot, Ts

Mini-slot
(variable start and length)

**FIG. 6B**

slot

Slot (symbols 0-13)

Symbol with control channel
(and possibly data)

Symbol with data channel
(e.g., PDSCH or PUSCH)

**FIG. 6C**

**FIG. 7**

EP 3 949 653 B1

*FIG. 8*

EP 3 949 653 B1

EP 3 949 653 B1

— LBT bandwidth is 20MHz by regulation
— Consider mode 2: wideband operation of 80MHz carrier

LBT successful
LBT failed
Guard band at 20MHz carrier edge

LBT Slots

* Need filter adaptation
* For dynamically swtiching the filter between different BW, the switching time depends on filter implementation.

* Challening leakage and blocking requirement within the wideband carrier bandwidth.

**FIG. 9**

# NR TRS – Tracking Reference Signal within Single Resource Block

Subcarriers

OFDM Symbol index within slot

*FIG. 10*

*FIG. 11*

**FIG. 12**

EP 3 949 653 B1

FIG. 13

*FIG. 14*

1599

STA$_1$
1510a

$\vec{H}_1$

STA$_2$
1510b

$\vec{H}_2$

STA$_3$
1510c

$\vec{H}_3$

Wi-Fi AP
1500

Wi-Fi AP | NDP-A | NDP | Trigger

STA$_1$ | BF feedback frame

STA$_2$ | BF feedback frame

STA$_3$ | BF feedback frame

time →

**FIG. 15**

EP 3 949 653 B1

41

1600

Performing a plurality of listen-before-talk (LBT) assessments for a corresponding plurality of substantially disjoint subsets of resources of a shared channel.  1610

Detecting energy levels of transmitted signals in the plurality of spatial regions using a corresponding plurality of spatial receive beams.  1612

Detecting energy levels of transmitted signals in a first plurality of spatial regions using a second plurality of spatial receive beams.  1614

Detecting energy levels of transmitted signals in the plurality of sub-bandwidths using a corresponding plurality of frequency-selective filters.  1616

Using a corresponding plurality frequency-selective filters, detecting energy levels of transmitted signals only in in a subset of resource blocks (RBs that include a reference signal (RS).  1618

Based on the plurality of LBT assessments, determining that at least one resource subset is available for transmission.  1620

Determining that a plurality of resource subsets are available based on substantially simultaneous LBT assessments.  1621

Comparing a detected energy level to a spatial ED threshold that is based on the gain of the spatial receive beam used for the spatial region.  1622

Determining that the spatial region is available if the detected energy level is below the spatial ED threshold.  1623

Determining that at least one subset of multiple adjacent spatial regions is available.  1624

Comparing a detected energy level to a sub-bandwidth ED threshold that is based on the particular sub-bandwidth relative to the bandwidth of the shared channel.  1625

Determining that the particular sub-bandwidth is available if the detected energy level is below the sub-bandwidth ED threshold.  1626

Comparing a detected energy level to a RB ED threshold that is based on a channel ED threshold and a factor related to having no data in the RB.  1627

Determining that the particular RB is available if the detected energy level is below the RB ED threshold.  1628

Transmitting signals or data to one or more user equipment (UE) using only resources selected from the at least one resource subset determined to be available.  1630

*FIG. 16*

1710         1720         1730         1700

| Processor | Program memory | Data memory |
|:---:|:---:|:---:|

1721

Bus 1770

| Transceiver | User Interface | Control Interface |
|:---:|:---:|:---:|

1740         1750         1760

**FIG. 17**

1810         1820         1830         1800

| Processor | Program memory | Data memory |
|:---:|:---:|:---:|

1821

Bus 1870

| Radio Network Interface | Core Network Interface | OA&M Interface |
|:---:|:---:|:---:|

1840         1850         1860

**FIG. 18**

1920

| UE | | Radio Access Network | Core Network | Internet | Host Computer |
|:---:|:---:|:---:|:---:|:---:|:---:|
| 1910 | | 1930 | 1940 | 1950 | 1960 |

**FIG. 19**

**EP 3 949 653 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016192395 A1
- US 2016037560 A1